**Europäisches Patentamt**

**European Patent Office**

**Office européen des brevets**

(19)

(11) Veröffentlichungsnummer : **0 571 403 B1**

(12) **EUROPÄISCHE PATENTSCHRIFT**

(45) Veröffentlichungstag der Patentschrift :
27.12.95 Patentblatt 95/52

(51) Int. Cl.$^6$ : **F16K 13/10**

(21) Anmeldenummer : **92902777.9**

(22) Anmeldetag : **20.01.92**

(86) Internationale Anmeldenummer :
**PCT/EP92/00108**

(87) Internationale Veröffentlichungsnummer :
**WO 92/14953 03.09.92 Gazette 92/23**

(54) **VERFAHREN UND GRENZFLÄCHENVENTIL ZUM TRENNEN EINES FLUIDES**

(30) Priorität : **15.02.91 DE 4104741**

(43) Veröffentlichungstag der Anmeldung :
**01.12.93 Patentblatt 93/48**

(45) Bekanntmachung des Hinweises auf die
Patenterteilung :
**27.12.95 Patentblatt 95/52**

(84) Benannte Vertragsstaaten :
**AT CH ES FR GB LI**

(56) Entgegenhaltungen :
**FR-A- 1 031 082**
**US-A- 4 949 742**

(73) Patentinhaber : **KISSLER, Gerhard**
**Posener Str. 90**
**D-93057 Regensburg (DE)**

(72) Erfinder : **KISSLER, Gerhard**
**Posener Str. 90**
**D-93057 Regensburg (DE)**

**Beschreibung**

Die Erfindung betrifft ein Verfahren und ein Grenzflächenventil zum Trennen eines Fluides.

Bisher erfolgte die Trennung von Fluiden auf mechanischem Wege, z. B. durch Absperrhähne oder Schieber. Unter einem Fluid ist sowohl ein gasförmiges, als auch ein flüssiges Medium zu verstehen.

In der patentschrift FR-A-10 31 082 wird ein Ventil zur Regelung des Flusses eines Fluids mit Hilfe eines schwammigen porösen Materials beschrieben. Das Ventil ist geöffnet, wenn das schwammige Material trocken ist. Absorbiert das schwammige Material eine Kontrollflüssigkeit, so schließt sich das Ventil. Das schwammige Material kann durch mechanische, physikalische oder chemische Maßnahmen wieder entleert und somit in den geöffneten Zustand zurückgeführt werden.

Der Erfindung liegt die Aufgabe zugrunde, ein Verfahren und ein Grenzflächenventil zum Trennen eines Fluides zu schaffen, bei dem das räumliche Trennen des Fluides entlang einer in weiten Grenzen frei definierbaren Trennfläche kontrolliert und mit geringem Energieaufwand erfolgt.

Diese Aufgabe wird erfindungsgemäß mit einem Verfahren mit den Merkmalen des Anspruches 1 und einem Grenzflächenventil mit den Merkmalen des Anspruches 7 gelöst.

In einem ein Fluid enthaltenen Raum kann eine beliebige Trennfläche gewählt werden, die den Raum in zwei Raumteile unterteilt und entlang derer die Trennschicht aus dem Trennfluid aufgebaut wird.

Das Trennfluid kann gezielt schichtartig entlang dieser Trennfläche in das Fluid eingebracht werden, und als Trennschicht für eine vorbestimmte Zeit mit einer solchen Grenzflächenspannung aufrechterhalten werden, daß das Fluid bezüglich der beiden durch die Trennfläche definierten Raumteile getrennt wird. Eine derartige Trennung des Fluides erfolgt kontrolliert, da lediglich die Grenzflächenspannung zwischen dem Trennfluid und dem Fluid an einem vorgegebenen Ort für eine vorgegebene Zeit so aufrechterhalten werden muß, daß keine Mischung erfolgt. Die Trennschicht kann bei diesem Verfahren auch nur an einem Bruchteil der Trennfläche des Raumes ausgebildet werden oder entlang der Trennfläche durch ein Weiterleiten des Trennfluides, insbesondere Pumpen oder Saugen, bewegt werden. Ein Trennen des Fluides nach dem erfindungsgemäßen Verfahren erfolgt mit geringem Energieaufwand, da das Einbringen des Trennfluides in das Fluid ein elastischer Vorgang ist. Mittels dieses Verfahrens kann sowohl ein Fluid, das nur aus einer Substanz besteht, getrennt werden, als auch ein Fluid, das zwei verschiedene Fluide umfaßt, wobei im letzten Fall die beiden unterschiedlichen Fluide voneinander getrennt werden können. Voraussetzung ist lediglich, daß das Trennfluid zumindest mit einem der zu trennenden Fluide nicht mischbar ist. Die zum Erzeugen der Grenzflächenspannung notwendigen Druckverhältnisse werden dann entsprechend den Materialkomponenten des Trennfluides und der Fluide und den räumlichen Bedingungen gewählt.

Bevorzugte Ausführungsformen der Erfindung sind in den Unteransprüchen offenbart.

Die Wirkungsweise des erfindungsgemäßen Verfahrens und Grenzflächenventiles hängt eng mit der Theorie der Oberflächenspannungskräfte und der Minimalflächen von Flüssigkeiten zusammen.

Bezüglich seiner Funktion ist das erfindungsgemäße Grenzflächenventil zwischen Membranen und mechanischen Ventilen einzuordnen. Das erfindungsgemäße Verfahren und Grenzflächenventil eröffnen auf mehreren Gebieten der Verfahrenstechnik und der Elektrochemie völlig neue Perspektiven. Im folgenden werden einige der möglichen Anwendungsgebiete genannt:

1. Allgemeine Verfahrenstechnik, Trennung und Vermischung von Reaktionsstoffen, Bau chemischer Reaktoren;

2. Allgemeine Elektrochemie, Trennung von Ionengemischen im großen, industriellen Maßstab, Galvanische Abscheidung metallischer Schichtstrukturen, Erzeugung von Supragittern, Heterostrukturen und Vielschichtsystemen in der Größenordnung von einigen zehntausend Schichtfolgen, Herstellung neuer Materialien mit anisotropen Werkstoffeigenschaften, Herstellung großflächiger Energiewandlerelemente auf galvanischem Wege;

3. Aufbereitung von Mineralien auf naßtechnischem Weg durch Ionentrennung, Gewinnung seltener Metalle, Ausbeutung bisher nicht abbauwürdiger Mineralvorkommen, Gewinnung seltener Mineralien aus Meerwasser oder aus Abwässern;

4. Umweltschutz, Rückgewinnung von Schwermetallen wie Cadmium, Blei, Quecksilber durch Ionentrennung, Recycling von Galvanobädern und Chemieabwässern;

5. Herstellung mikromechanischer Reaktions- und Analyseapparaturen im Bereich der Silicium-Ätztechnik;

6. Medizinische Technik, Apparaturen für die Entgiftung und Aufbereitung von Blut.

Weitere wesentliche Vorteile des erfindungsgemäßen Verfahrens und Grenzflächenventiles und deren Ausführungsbeispiele sind im folgenden genannt:

1. die erfindungsgemäßen Grenzflächenventile können mittels bekannter und technologisch beherrschbarer Materialien unproblematisch und ökonomisch hergestellt werden, insbesondere mittels polymerer Werkstoffe, z. B. durch die sogenannte Tiefziehtechnik,

2. es wird die Möglichkeit eröffnet, große Trennflächen im Bereich von einigen Quadratmetern und mehr kontrolliert mit minimaler Arbeitszeit in der Größenordnung von einer Sekunde, bei minimalem Energieaufwand, praktisch schlagartig zu öffnen und zu schließen,

3. der eigentliche Ventilkörper, die Halterung für das Trennmedium, ist über große Zeiträume verschleißfrei und

4. die Stabilität ist groß gegenüber äußeren Druckänderungen.

Im folgenden ist die Erfindung anhand der Zeichnung näher beschrieben. Es zeigen:

Figur 1 einen Querschnitt eines erfindungsgemäßen Grenzflächenventiles,

Figur 2a bis e weitere Ausführungsbeispiele eines erfindungsgemäßen Grenzflächenventiles im Querschnitt,

Figur 3a bis c ein Ausführungsbeispiel einer Halterung eines weiteren erfindungsgemäßen Ausführungsbeispieles des Grenzflächenventiles im Querschnitt,

Figur 4a und b eine Draufsicht auf eine erfindungsgemäße Platte einer Halterung eines weiteren Ausführungsbeispieles des erfindungsgemäßen Grenzflächenventiles,

Figur 4c einen Querschnitt durch die Platte aus Figur 4a, 4b,

Figur 4d eine Draufsicht auf eine weitere erfindungsgemäße Platte der Halterung des Ausführungsbeispieles des Grenzflächenventiles aus Figur 4a bis 4c,

Figur 4e einen Querschnitt des Ausführungsbeispieles des Grenzflächenventiles aus Figur 4a bis d,

Figur 5a, 5b weitere Ausführungsbeispiele des erfindungsgemäßen Grenzflächenventiles im Querschnitt,

Figur 5c, 5d zwei weitere erfindungsgemäße Ausführungsbeispiele des Grenzflächenventiles in Untersicht,

Figur 5e, 5f die Ausführungsbeispiele des Grenzflächenventiles aus Figur 5c, 5d,

Figur 6a bis 6e weitere erfindungsgemäße Ausführungsbeispiele des Grenzflächenventiles im Querschnitt,

Figur 6f ein weiteres Ausführungsbeispiel eines erfindungsgemäßen Grenzflächenventiles im Querschnitt,

Figur 6g eine Steuerung für das erfindungsgemäße Grenzflächenventil aus Figur 6f,

Figur 7a ein weiteres erfindungsgemäßes Ausführungsbeispiel der Halterung des Grenzflächenventiles im Querschnitt,

Figur 7b, 7c weitere Ausführungsbeispiele des erfindungsgemäßen Grenzflächenventiles im Querschnitt,

Figur 7d ein weiteres Ausführungsbeispiel gemäß Figur 7b, 7c in perspektivischer Ansicht,

Figur 8a einen erfindungsgemäßen Lochkanal des Ausführungsbeispieles des Grenzflächenventiles aus Figur 7b, 7c, 7d in Draufsicht,

Figur 8b einen erfindungsgemäßen Lochkanal des Ausführungsbeispieles aus Figur 7a in Draufsicht,

Figur 8c, 8d, 8e erfindungsgemäße Ausführungsbeispiele für die Querschnittsflächen der Lochkanäle in Draufsicht,

Figur 8f ein weiteres Ausführungsbeispiel des Lochkanales im Querschnitt,

Figur 9a, 9b ein weiteres erfindungsgemäßes Ausführungsbeispiel des Lochkanales im Querschnitt,

Figur 10a, 10b, 10c Ausführungsbeispiele für Anpreßstempel in den Lochkanälen im Querschnitt,

Figur 11a, 11b, 11c ein weiteres Ausführungsbeispiel des Anpreßstempels in dem Lochkanal im Querschnitt,

Figur 12 ein weiteres Ausführungsbeispiel des erfindungsgemäßen Grenzflächenventiles im Querschnitt,

Figur 13a ein weiteres Ausführungsbeispiel des erfindungsgemäßen Grenzflächenventiles im Querschnitt,

Figur 13b, 13c, 13d weitere Ausführungsbeispiele des erfindungsgemäßen Grenzflächenventiles in perspektivischer Ansicht,

Figur 14 ein Mehrstoffelektrodensystem unter Verwendung des erfindungsgemäßen Grenzflächenventiles im Querschnitt,

Figur 15a bis 15d die schematische Darstellung einer Ionentrennungsapparatur mit dem erfindungsgemäßen Grenzflächenventil,

Figur 15e bis g ein weiteres Ausführungsbeispiel der Ionentrennanlage mit einem erfindungsgemäßen Grenzflächenventil in Draufsicht,

Figur 15h ein weiteres Ausführungsbeispiel der Ionentrennapparatur mit dem erfindungsgemäßen Grenzflächenventil in Draufsicht,

Figur 16 die schematische Darstellung eines weiteren Ausführungsbeispieles eines Grenzflächenventilsystemes unter Verwendung des erfindungsgemäßen Grenzflächenventiles im Querschnitt.

Figuren 17a und 17b zeigen Skizzen zur Erläuterung der physikalischen Zusammenhänge zwischen dem Druck auf das Trennmedium und den Lochkanälen und

Figur 18 ein weiteres Ausführungsbeispiel eines Zweiplatten-Grenzflächenventiles im geschlossenen und ruhenden Zustand.

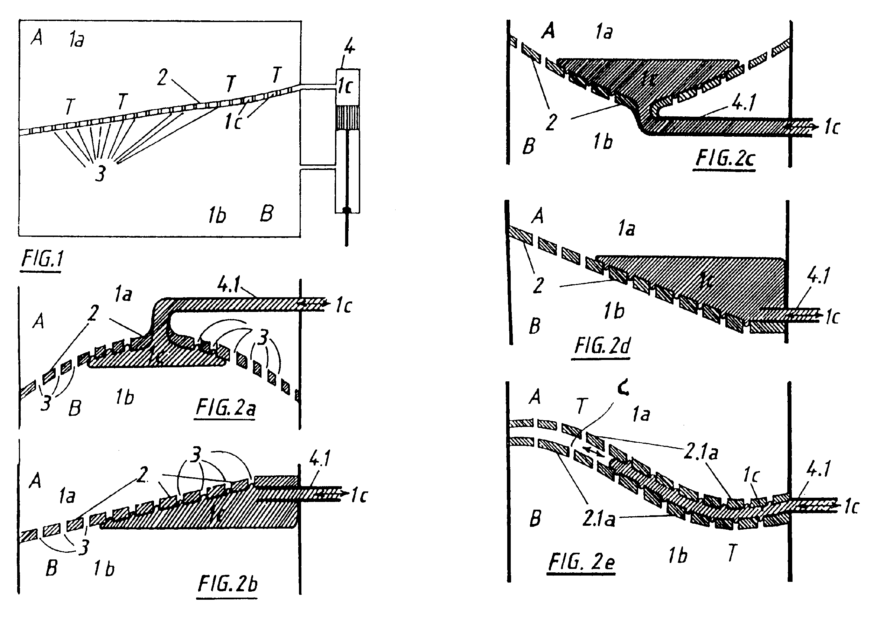

Figur 1 zeigt einen Querschnitt durch ein erfindungsgemäßes Grenzflächenventil. Seine wesentlichen Bestandteile sind die meist großflächig ausgelegte Halterung 2 für das Trennfluid 1c, in der Lochkanäle 3 eingelassen sind, und der Druckmechanismus 4, mit dem das Trennfluid 1c bewegt wird.

Die Raumteile A und B enthalten die zu trennenden Fluide 1a und 1b. Ohne Anwesenheit des Trennfluides 1c verbindet der jeweilige Lochkanal 3 die Raumteile A und B. Mittels dem Druckmechanismus 4 wird das Trennfluid lc so in den Innenraum des Lochkanales 3 gepreßt, daß der Lochkanal 3 infolge der Ausbildung konvexer oder wenigstens lokal konvexer Grenzflächenbereiche von dem Trennfluid 1c ganz oder teilweise verschlossen wird.

Die einzelnen Ausführungsformen des Grenzflächenventiles unterscheiden sich im wesentlichen durch die Formgebung der Halterung 2, die Formgebung der Ränder der Lochkanäle 3 und die Arbeitsweise des Trennfluides 1c beim Verschließen oder Öffnen der Lochkanäle 3.

Ist der Schließvorgang damit verbunden, daß in der Oberfläche des Trennfluides 1c Löcher neu gebildet oder verschlossen werden, so wird von einem Grenzflächenventil mit Lochschluß gesprochen.

Figur 2a, 2b, 2c, 2d zeigen bevorzugte Ausführungsbeispiele des Grenzflächenventiles mit einer einfachen Ausführungform der Halterung 2 für das Trennfluid 1c. Die Halterung 2 umfaßt eine mit den Lochkanälen 3 versehene starre oder flexible Platte, deren Form so gestaltet ist, daß sie jeweils eine ausgeprägte Stelle mit einem absoluten Höhenmaximum oder -minimum besitzt, das dort ausgebildet ist, wo eine Druckleitung 4.1 zum Einpressen des Trennfluides 1c mittels des Druckmechanismus 4 einmündet. Das Trennfluid 1c ist jeweils so gewählt, daß es gegenüber den beiden Fluiden la im Raumteil A und 1b im Raumteil B stabile Grenzflächen ausbildet. Die Fluide la und 1b können hier und in allen weiteren Ausführungsbeispielen der Erfindung auch identisch sein. In den erfindungsgemäßen Ausführungsbeispielen des Grenzflächenventiles gemäß Figur 2a und Figur 2b ist das Trennfluid 1c leichter als die Fluide la und lb. Bei den erfindungsgemäßen Ausführungsbeispielen gemäß Figur 2c und 2d ist das Trennfluid 1c schwerer als die Fluide 1a und 1b.

Die Ränder der Lochkanäle 3 sind so geformt, daß die Grenzflächenbereiche des Trennfluides 1c innerhalb der Lochkanäle 3 konvex sind und die lokale Krümmung stets einen für die Stabilität dieses Grenzflächenbereiches maßgebenden Wert k nicht unterschreitet, so daß durch das Auftreten genügend großer Kapillarkräfte das Trennfluid 1c für ein gewisses zulässiges Druckintervall (P0, P1), des von dem Druckmechanismus 4 ausgeübten Druckes P, in einer stabilen Lage verharrt und nicht durch die Lochkanäle 3 in den angrenzenden Raumteil A oder B fließt.

Der Druckmechanismus 4 zum Einpressen oder Absaugen des Trennfluides 1c kann hier wie bei allen Ausführungsformen der Halterung 2 direkt mit der Halterung 2 oder extern über eine Druckleitung 4.1 verbunden werden. Soweit es erforderlich ist, wird durch den Druckmechanismus 4 das der Volumenverdrängung durch das Trennfluid 1c entsprechende Volumen von dem Raumteil A oder dem Raumteil B oder von beiden Raumteil A und B abgesaugt oder wieder eingepreßt, bis der Druck in der Nähe der Trennschicht T annähernd dem vorherigen Zustand entspricht. Dieser Vorgang spielt bei abgeschlossenen Behältern eine Rolle. Technisch läßt sich der Druckmechanismus 4 mittels einer Zweikammer-Kolbenpumpe entprechend Figur 1 realisieren. Um das Grenzflächenventil zu schließen, wird der Druck P seitens des Druckmechanismus 4 innerhalb des zulässigen Druckintervalles (P0, P1) stetig erhöht, bis die Lochkanäle 3 durch das Trennfluid 1c sukzessive abgedeckt sind. Geöffnet wird das Grenzflächenventil durch eine entsprechende Verminderung des Druckes P innerhalb desselben Druckintervalles (P0, P1). Soweit eine genügend große Anzahl flächendeckend verteilter Lochkanäle 3 in der Halterung 2 vorhanden ist, kann mit einem solchen Grenzflächenventil die Trennschicht T graduiert geöffnet und verschlossen werden. Dies gilt bei allen erfindungsgemäßen Ausführungsformen des Grenzflächenventiles entsprechend.

Ferner ist es bei allen Ausführungsformen der Halterung 2 möglich, daß die Halterung 2 nur einen Lochkanal 3 aufweist. Eine solche Ausführungsform ist z. B. für das Öffnen und Schließen von Rohrleitungen 3 mit sehr geringem Querschnitt, im Bereich von 0,1 mm, besonders vorteilhaft.

Die Formgebung der Ränder der Lochkanäle 3 ist unabhängig von der Ausführungsform der Halterung 2 nicht auf die hier dargestellte Röhrenform beschränkt, sondern kann in mannigfacher Weise variiert werden; z. B. können Drahtnetze, Textilgewebe und ähnliche, flächenförmige, mit Löchern versehene, starre oder flexible Wandungen verwendet werden.

Die in den Figuren 2a, 2b, 2c, 2d dargestellten erfindungsgemäßen Grenzflächenventile werden als lageabhängige Einplatten-Grenzflächenventile ohne Lochschluß bezeichnet.

Bei diesem Typ ist es notwendig stets größere Mengen des Trennfluides 1c zu bewegen; daher arbeiten diese Grenzflächenventile relativ träge.

Figur 2e zeigt ein erfindungsgemäßes Grenzflächenventil, das als Zweiplatten-Grenzflächenventil ohne Lochschluß bezeichnet wird. Gemäß diesem Ausführungsbeispiel werden die oben beschriebenen Einplatten-Grenzflächenventile so kombiniert, daß das für das Trennfluid 1c vorgesehene Volumen in einer Kammer C gegenüber den Raumteilen A und B durch zwei der Platten 2, in denen die Lochkanäle 3 ausgebildet sind, global abgetrennt ist. Die Zweiplatten-grenzflächenventile haben gegenüber den Einplatten-Grenzflächenventilen den Vorteil, daß das Trennfluid 1c gegenüber äußeren Druckschwankungen, die von den Fluiden 1a und 1b übertragen werden, innerhalb der Kammer C weitgehend stabil verharrt. Der Abstand der beiden Lochplatten 2.1a kann unschwer durch geeignete Abstandshalter oder durch Ausbuchtungen der Platten 2.1a, die zum Abstandhalten dienen, konstant gehalten werden. Um das Zweiplatten-Grenzflächenventil ohne Lochschluß zu öffnen oder zu schließen, muß das Trennfluid 1c jeweils vollständig aus der Kammer C abgesaugt oder vollständig wieder eingepreßt werden. Dieses Grenzflächenventil kann in vorteilhafter Weise an eine gewünschte Trennfläche T von den Raumteilen A und B weitgehend angepaßt werden.

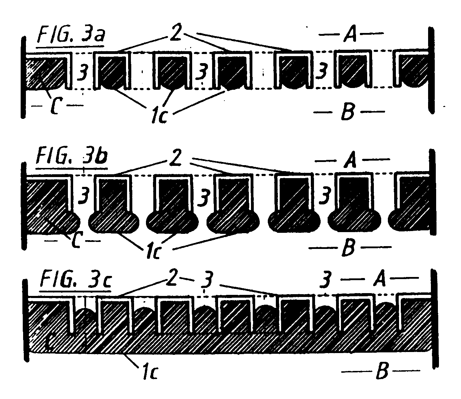

Figur 3a, 3b, 3c zeigen ein Ausführungsbeispiel der Halterung 2 des erfindungsgemäßen Einplatten-Grenzflächenventiles mit Lochschluß, das relativ schnell arbeitet. Zum Schließen des Grenzflächenventiles müssen nur kleine Mengen des Trennfluides 1c bewegt werden. Diese Ausführungsform des Grenzflächenventiles unterscheidet sich von denen aus Figur 2a bis 2e beschriebenen Typ dadurch, daß es annähernd horizontal eingebaut und fixiert werden muß. Ferner ragen die Ränder der Lochkanäle 3 stutzenförmig aus der plattenförmigen Halterung 2 in das für das Trennfluid 1c vorgesehene Raumteil C an der Halterung 2 hinein. Bei dieser Ausführungsform des Grenzflächenventiles kann auch im geöffneten Zustand ein zusammenhängendes Volumen des Trennfluides 1c innerhalb des Raumteiles C verbleiben. Beim Schließen quillt das Trennfluid 1c unter Ausbildung lokal konvexer, ringförmiger Grenzflächenbereiche über die Enden der stutzenförmigen Ränder der Lochkanäle 3 (Figur 3b) und verengt die jeweiligen Lochflächen der Lochkanäle 3 so lange bis es zu dem Prozeß des Lochschlusses der Oberfläche von dem Trennfluid 1c kommt (Figur 3c). Bei einer weiteren Druckerhöhung seitens des Druckmechanismus 4 dringt das Trennfluid 1c in die jeweiligen Lochkanäle so lange ein, bis durch auftretende Kapillarkräfte infolge der Ausbildung gekrümmter, stabiler Grenzflächenbereiche, eine innerhalb des zulässigen Druckintervalles (P0, P1) stabile Gleichgewichtslage eintritt. Durch Verringern des Druckes P seitens des Druckmechanismus 4 kann dieser Vorgang des Lochschlusses in der Oberfläche von dem Trennfluid 1c wieder rückgängig gemacht werden. Die charakteristische Druckkurve, die den funktionalen Zusammenhang zwischen dem augenblicklichen Druck in dem Trennfluid 1c und der jeweiligen effektiven, minimalen Lochfläche für nicht-oszillierenden äußeren Druck in den Fluiden 1a und 1b erfaßt, zeigt bezüglich des Öffnens und Schließes eine Hystereseschleife. Durch die Verwendung von plattenförmigen Halterungen 2 mit gleichmäßig, musterförmig verteilten Lochkanälen, deren stutzenförmige Ränder gruppenweise abgestuft sind, kann die charakteristische Druckkurve in weiten Grenzen variiert und äußeren Gegebenheiten oder bestimmten Erfordernissen angepaßt werden.

Versuche mit den erfindungsgemäßen Ein- und Zweiplatten-Grenzflächenventilen zeigten, daß die Lochquerschnitte der Lochkanäle 3 auch von der Art des Betriebes abhängig sind.

Bei sehr langsamen Öffnen und Schließen der Grenzflächenventile können noch relativ große Lochquerschnitte verwendet werden. Im Gegensatz zu diesem quasistatischen Betrieb muß beim dynamischen Betrieb, bei dem Druckstöße auf das Trennfluid 1c ausgeübt werden, der Lochquerschnitt wesentlich kleiner gewählt werden.

Es ist eine Vielzahl von Kombinationen bezüglich der verwendeten Fluide 1a, 1b und dem Trennfluid 1c denkbar. Da für die praktische industrielle Anwendung die Verwendung von Wasser für die Fluide 1a und 1b und Luft als Trennfluid 1c von großer Bedeutung ist, wird im folgenden die Erfindung anhand dieses Beispieles beschrieben. Da das Übertragen auf andere Stoffkombinationen keine außerhalb des Könnens des Durchschnittsfachmannes erforderlichen Überlegungen und Maßnahmen erfordert, wird auf diese nicht näher eingegangen. Es sei nur noch erwähnt, daß auch die Verwendung von Wasser für das Fluid 1a und 1b und Paraffinöl für das Trennfluid eine in der Praxis vorkommende, bedeutende Stoffkombination darstellt. Ebenfalls liegt die Wahl des Materiales der Lochplatten und aller sonstigen festen Teile des hier beschriebenen Grenzflächenventiles im Können des Durchschnittsfachmannes.

Bezüglich der Dimensionierung des Druckes pa auf das Trennmedium (1c) und der Lochkanäle gelten annähernd die folgenden Überlegungen:

Es bezeichne x den Längenparameter der Verbindungslinie der Schwerpunkte der geometrischen Querschnittsflächen eines Lochkanales.

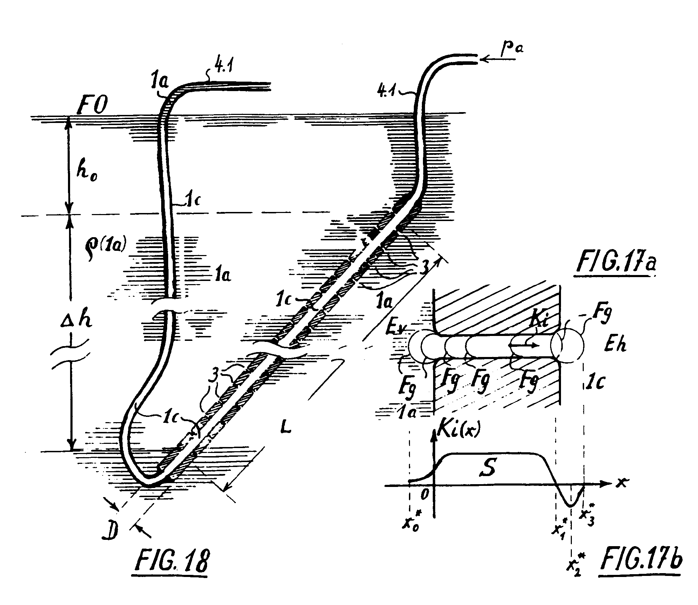

Entsprechend des in Fig. 17a im Längsschnitt dargestellten Lochkanales kann jeder am Ort x auftretenden Grenzfläche Fg(x) des Systemes Wasser/Luft der Wert $Ki(x)$ ($N/_m 2$) des dort auftretenden orientierten Kapillardruckes als Funktion von x zugeordnet werden (Fig. 17b).

Wird der Einfachheit halber angenommen, daß die auftretenden Querschnittsflächen kreisförmig sind und beträgt der halbe Durchmesser des betreffenden Lochkanales am Orte x gleich $r(x)$, so ist der Betrag des an der Grenzfläche Fg(x) auftretenden Kapillardruckes $Ki(x)$ gleich $2 \cdot /r(x)$ $N/_m 2$, wobei $= (1a, 1c)$ die spezifische Oberflächenspannung der Grenzfläche Fg(x) des Systemes Wasser/Luft mit der Dimension (N/m) bezeichnet. Außerhalb des freien Endes des Lochkanales am Ort Ev sinkt $Ki(x)$ bis zu einem gewissen Wert $x_0^*$, bei dem die Ablösung der Gasblase einsetzt, stark ab.

Am anderen Ende Eh des Lochkanales kehrt sich die Orientierung von $Ki(x)$ ab einem kritischen Wert $x_1^*$ um, wächst dann von 0 bis zu einem gewissen negativen Wert $- Ki(x_2^*)$, um schließlich betragsmäßig wieder bis zu einem weiteren kritischen Wert $x_3^*$ stark abzunehmen, wo die Ablösung eines Wassertropfens in dem Medium Luft (1c) einsetzt. Innerhalb des Intervalles $0, x_1^*$ kann der Betrag und die Form der Funktion Ki(x) entsprechend der Dimensionierung von r(x) weitgehend beeinflußt werden. Dies spielt insbesondere für die Anpassung des Grenzflächenventiles an den äußeren Druck pa, $N/_m2$ oder umgekehrt für die Anpassung des Kapillardruckes Ki(x) an pa eine Rolle.

Allgemein ist ein Grenzflächenventil mit solchen Lochkanälen umso robuster und stabiler im Betrieb, je größer und länger der Bereich S über dem Intervall 0, $x_1^*$ ist.

Im übrigen kann auch durch Anbringen von gegebenenfalls käfigförmigen Anpreßstempeln an den Enden Ev und Eh des Lochkanales, die beispielsweise gleichzeitig zur Halterung einer Lochanpreßplatte dienen können, der Verlauf der Kurve Ki(x) in dem Intervall $x_0^*$, 0 oder $x_1^*$, $x_3^*$ stark beeinflußt werden.

Der Betrieb eines Grenzflächenventiles mit gleichförmigen Lochkanälen und der Kombination (1a) = (1b) = Flüssigkeit, (1c) = Gas ist entsprechend Figur 18 abhängig

a) von der minimalen Eintauchtiefe $h_0$ bezogen auf die Flüssigkeitsoberfläche FO von (1a),

b) vom maximalen Höhenunterschied $\Delta$ h der vorhandenen Lochkanäle bezogen auf die Flüssigkeitsoberfläche FO. Die Dicke des Grenzflächenventiles D wird wie die Dichte des gasförmigen Trennmediums $\rho$ (1c) für die folgende Überlegung vernachlässigt. Außerdem wird angenommen, daß die Länge der Lochkanäle in einer Größenordnung von weniger als 10 mm liegt.

In Figur 18 ist ein Zweiplatten-Grenzflächenventil im geschlossenen und ruhenden Zustand dargestellt. Dabei ist der äußere Druck pa auf das Trennmedium (1c) um den Betrag pa größer als der hydrostatische Druck ($h_0$ + $\Delta$ h) $\cdot$g welcher in der Tiefe ($h_0$ + $\Delta$ h) herrscht. Der Querschnitt der Lochkanäle 2r ist dann durch die Abschätzung

$$pa < \frac{2}{r}\,\frac{N}{m^2}$$

näherungsweise zu berechnen.

Für den dynamischen Betrieb, wenn also stoßartige Druckschwankungen auf das Trennmedium (1c) einwirken, sind die Werte für r entsprechend zu verkleinern.

Praktische Versuche mit einem Zweiplatten-Grenzflächenventil, welches aus Kunststoffplatten gefertigt wurde, haben für das System (1a) = (1b) = Wasser und (1c) = Luft, zu befriedigenden Ergebnissen geführt.

Die Lochkanäle hatten einen kreisförmigen konstanten Querschnitt mit dem Durchmesser 2r = 0,5 mm und waren 7 mm lang. Die Länge L ensprechend Figur 18 betrug 100 mm, die Dicke D 20 mm.

Es wurde in einer Tiefe von annähernd 20 cm unter der Wasseroberfläche betrieben, bei einem äußeren Druck pa auf (1c), der annähernd dem Druck einer Wassersäule von 30 cm Höhe entsprach. Bei dem Wasser handelte es sich um normales jedoch kalchaltiges Leitungswasser. Seine Temperatur betrug ca. 15°C.

Weitere Grenzflächenventile deren Lochkanäle langgezogene Spalte von ca. 0,1 mm Breite, 10 mm Länge und 7 mm Tiefe waren, wurden unter ähnlichen Bedingungen erfolgreich getestet. Zweiplatten-Grenz flächenventile mit Lochdurchmessern von 1 mm und darüber waren hingegen für das System Wasser = (1a) und Luft = (1c) nicht brauchbar, da bei diesen die Luft über die Lochkanäle perlend entwich.

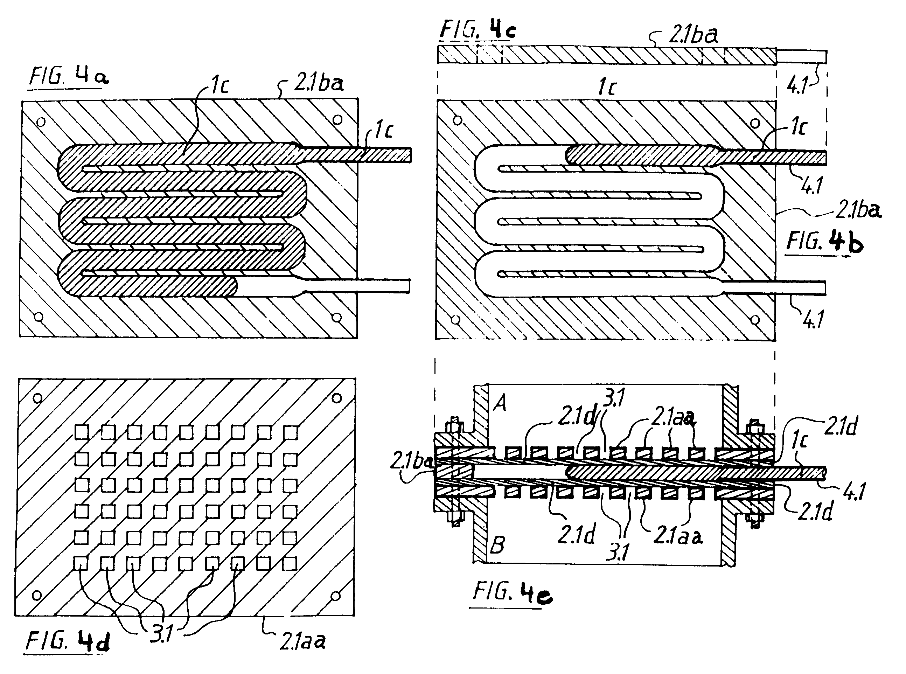

In Figur 4a - e ist ein erfindungsgemäßes Ausführungsbeispiel des Zweiplatten-Grenz flächenventiles dargestellt. Sie ist besonders kostengünstig herzustellen und bereits erprobt. Dieses Ausführungsbeispiel ist insbesondere für Zwecke der Elektrophorese verwendbar, wobei für die Fluide 1a und 1b Wasser und für das Trennfluid 1c Luft verwendet wird.

Bei diesem erfindungsgemäßen Ausführungsbeispiel ist das Zweiplatten-Grenzflächenventil aus zwei Kunststoffplatten 2.1ba, 2.1aa zusammen mit zwei Stücken aus geeignetem Textilgewebe 2.1d durch Verschrauben zusammengebaut. Das Grenzflächenventil ist beim Betrieb ganz in Wasser eingetaucht. Die als Trennfluid verwendete Luft 1c wird gemäß Figur 4e, 4b und 4a über eine Schlauchleitung bei einem Stutzen 4.1 eingepreßt und das verdrängte Wasser wird beim zweiten Stutzen 4.1 wieder abgeleitet. Dadurch wird der Vorteil erzielt, daß in der Halterung für das Trennfluid 1c weder beim Schließen noch beim Öffnen des Grenzflächenventiles unerwünschte Reste von dem Fluid 1a oder 1c zurückbleiben, da die bewegte Luft 1c sowohl im Zulieferungsschlauch wie auch in dem mäanderförmigen Führungskanal in einer mittleren Abstandsplatte 2.1ba ein zusammenhängendes schlauchartiges Volumen mit definierten Grenzflächen einnimmt. Die beiden Stücke Textilgewebe 2.1d dienen als Lochrasterplatten mit besonders feinen Löchern. Als Material kann beispielsweise Baumwollgewebe verwendet werden. Die Kunststoffplatten 2.1aa mit Lochraster dienen lediglich zur Fixierung der beiden Stücke Textilgewebe 2.1d. Der Abstand der Ränder des Führungskanales der mittleren Abstandsplatte betrug beim Prototyp 5 mm, die Tiefe desselben betrug ebenfalls 5 mm. Da die Textilgewebe von Wasser benetzt werden, sind sie für Ionen durchlässig und die Porenweite des Gewebes spielt eine untergeordnete Rolle.

Ein weiteres vorteilhaftes Ausführungsbeispiel des erfindungsgemäßen Grenzflächenventiles, das insbesondere bei der Verwendung von Wasser als Fluid 1a und 1b und Luft oder Paraffinöl als Trennfluid 1c robust und zuverlässig arbeitet und für sehr große, meist horizontale Trennflächen verwendbar ist, ist in den Figuren 5a bis 5f dargestellt.

Bei dieser Ausführungsform des Grenzflächenventiles umfaßt die Kammer C einen plattenförmigen Hohlraum D, die Zuleitungs- und Abflußstutzen 4.1 für das Trennfluid lc sind höhenversetzt angeordnet.

Die Kammer C ist aus festen Platten gebildet. In der Grund- und in der Deckenplatte der Kammer C sind Röhren oder Kapillaren 3, 3.2, 3.3, 3.4, 3.5 eingelassen, die in den Hohlraum D so hineinragen, daß sich die Niveauflächen ihrer Enden überschneiden. Werden die von oben nach unten in den Hohlraum D weisenden Enden der Röhren der Kapillaren 3.2, 3.3, 3.4, 3.5 senkrecht auf eine vertikale Gerade projiziert und ebenso die von unten nach oben weisenden Enden der übrigen Rohre oder Kapillaren 3.2, 3.3, 3.4, 3.5, so überschneiden sich die projizierten Strecken auf der Geraden.

Eine besonders einfache Ausführungsform, die für annähernd horizontale Trennflächen verwendet wird, ist in Figur 5e in geöffnetem Zustand und in Figur 5f in geschlossenem Zustand dargestellt. Figur 5c und 5d zeigen das Grenzflächenventil aus Figur 5e und 5f in zwei Ausgestaltungen. Gemäß Figur 5c weisen die Röhren oder Kapillaren 3.2 einen spaltförmigen, gemäß Figur 5d einen kreisförmigen Querschnitt auf. Auch sonstige Querschnitte sind möglich.

Gemäß der Ausführungsform des Grenzflächenventiles in Figur 5a, das in geschlossenem Zustand dargestellt ist, haben die von oben nach unten in den Hohlraum D hineinragenden Röhren oder Kapillaren 3.2 einen kleineren Querschnitt als die ihnen paarweise gegenüberstehenden Röhren oder Kapillaren 3.3, die von unten nach oben weisen. Die Röhren oder Kapillaren 3.2 münden in die Röhren oder Kapillaren mit größerem Querschnitt so ein, daß die freie Querschnittsfläche der Kapillaren oder Röhren 3.3 nur teilweise ausgefüllt wird.

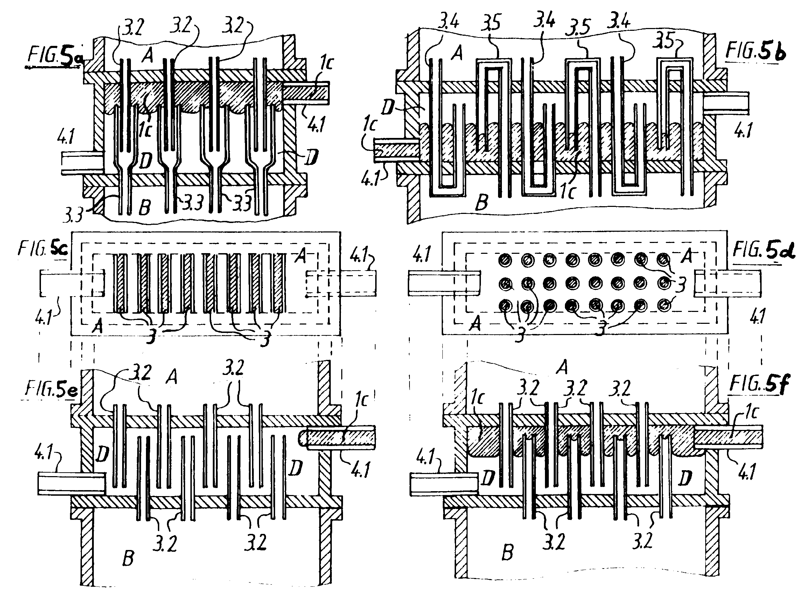

In Figur 5b ist eine weitere Ausführungsform des Grenzflächenventiles in geschlossenem Zustand dargestellt. Es wird hier angenommen, daß das Trennfluid 1c schwerer als das Fluid la ist. Die Röhren oder Kapillaren 3.4, 3.5 sind U-förmig ausgebildet und jeweils entgegengesetzt orientiert in die Decken- und Bodenplatte der Kammer C eingebaut.

Bei allen Ausführungsformen der Figur 5 können die Lochquerschnitte in weiten Grenzen unabhängig von der Ausbildung konvexer Grenzflächen zwischen dem Fluid 1a und dem Trennfluid 1c variiert werden, sofern die Trennfläche horizontal verläuft und das Grenzflächenventil darauf ausgerichtet ist. Bei der Verwendung der Kapillaren 3.2, 3.3, 3.4 ist das Grenzflächenventil sogar weitgehend lageunabhängig. Es ist auch bei der Verwendung von Paraffinöl aus Fluid 1a und 1b und Wasser oder Luft als Trennfluid 1c verwendbar.

In Figur 6a bis 6e sind Grenzflächenventile für das Öffnen und Verschließen der Kapillaren 3d, 3e dargestellt. Ihr einfacher Aufbau ermöglicht beispielsweise ihre Verwendung in miniaturisierten Silicium-Bauelementen.

Figur 6a zeigt ein Grenzflächenventil, das mittelbar von außen über eine an einen Widerstand (R) angelegte Spannung (U) gesteuert wird, wobei ein im Widerstand (R) fließender Strom Ohmsche Wärme erzeugt, und die Kapillare 3d durch die Wärmeausdehnung des Trennfluides 1c verschlossen wird. Das Trennfluid 1c befindet sich zusammen mit dem Widerstand R in der gleichen Kammer C und ist mit einem T-Stück an die Kapillare angeschlossen.

Das Prinzip der Ansteuerung über den Widerstand R kann entsprechend Figur 6f und 6g dazu verwendet werden, besondere lageunabhängige Grenzflächenventile mit einer oder mit zwei Lochanpreßplatten 2.1c zu bauen. Dazu sind entsprechend der Anzahl der Lochkanäle 3 der Platte 2.1 getrennte Kammern C1 für das Trennfluid 1c und den jeweiligen Widerstand R vorgesehen, die gerätefest mit ihren Öffnungen den konisch zulaufenden Lochkanälen gegenüberstehen. Befindet sich dieses Grenzflächenventil in einem wäßrigen Medium 1a, so kann über Sensoren F1, F2,... FN, und E1, E2,... EN jeweils die lokale Leitfähigkeit des Fluides 1a, die vom Grad der Öffnung des betreffenden Lochkanales abhängig ist, gemessen werden. Werden die einzelnen Leitfähigkeitswerte in einzelne Spannungen U1,... UN proportional umgesetzt, so können diese wiederum N Verstärkern zur Spannungs-Strom-Verstärkung zugeführt werden. Ein gemeinsam ansteuerbares System von N solchen Verstärkern (Figur 6g) kann sodann die entsprechenden Ströme I1,... IN für die N Widerstände R in den Kammern C1 liefern, deren Ohmsche Wärme indirekt die Steuerung des jeweiligen Druckes des Trennfluides in der Kammer C1 bewirkt.

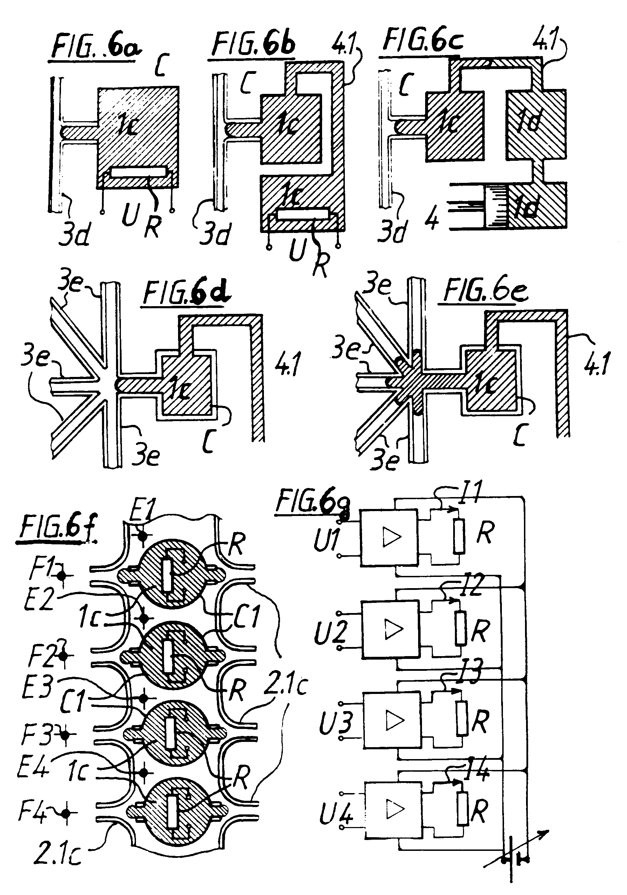

Figur 6b zeigt ein anderes Ausführungsbeispiel des Grenzflächenventiles, bei welchem die Kammer mit dem Widerstand R über eine längere Leitung 4.1 von der Kammer C für das Trennfluid 1c getrennt ist. Dadurch wird eine Beeinträchtigung der Oberflächenspannung, die durch die Druckerzeugung durch Ohmsche Wärme hervorgerufen werden kann, ausgeschlossen. Bei dem Grenzflächenventil nach Figur 6c wird der Druck für das Trennfluid 1c außerhalb der Kammer C in einem besonderen Druckgeber 4 erzeugt und über ein Puffermedium 1d, das gegenüber dem Trennfluid 1c eine definierte Trennfläche ausbildet, und über eine Rohrleitung 4.1 übertragen.

Figur 6d zeigt eine Ausführungsform des Grenzflächenventiles, das zur gleichzeitigen Regelung eines sternförmigen Bündels von Kapillaren 3e dient, in geöffnetem Zustand; in Figur 6e ist das gleiche Grenzflächenventil in geschlossenem Zustand dargestellt.

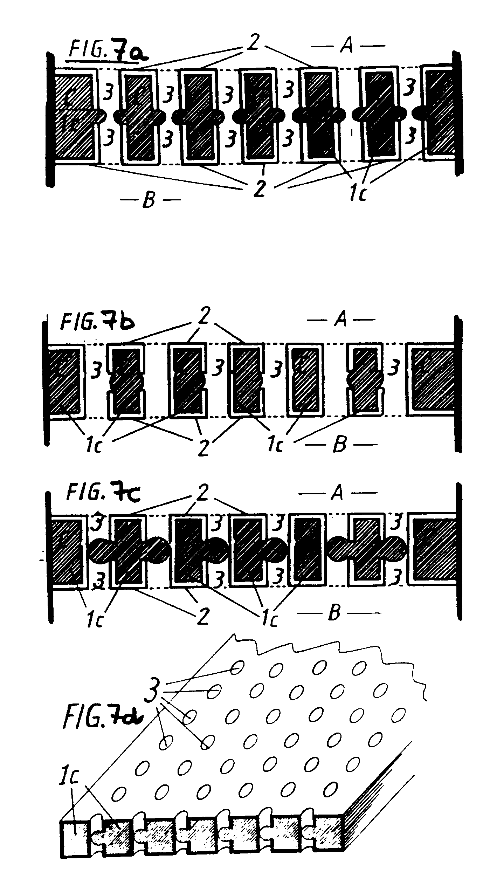

Figur 7a zeigt ein Zweiplatten-Grenzflächenventil mit Lochschluß, das zwar annähernd horizontal einzubauen ist, dafür aber den Vorteil aufweist, daß für den Öffnungs- und Schließvorgang nur ein minimaler Teil des Trennfluides 1c bewegt werden muß.

Die Ränder der Lochkanäle 3 der beiden Lochplatten können bei dem Zweiplatten-Grenzflächenventil so ausgeformt und miteinander verbunden werden, daß sie zugleich zur Abstandshaltung dienen, wobei zum Einpressen des Trennfluides 1c in die inneren Wandungen der Lochplatten seitliche Öffnungen ausgespart werden müssen. Entsprechend der Anzahl und Anordnung solcher seitlicher Öffnungen für das Trennfluid 1c wird zwischen Lochkanälen 3 mit Anpreßfunktion (Figur 7b, 7c, 7d) und solchen mit Lochschluß (Figur 7a) unterschieden.

Die Geometrie der Lochkanäle 3 mit Anpreßfunktion ist dadurch bestimmt, daß in der Wandung des jeweiligen Lochkanales 3 der betreffenden seitlichen Öffnung jeweils als Kontakt- und Anpreßfläche für das Trennfluid 1c ein zusammenhängender Teil der Wandung entgegensteht. Dahingegen ist die Geometrie der Lochkanäle 3 mit Lochschluß dadurch bestimmt, daß der jeweiligen seitlichen Öffnung eine weitere solche Öffnung entgegensteht.

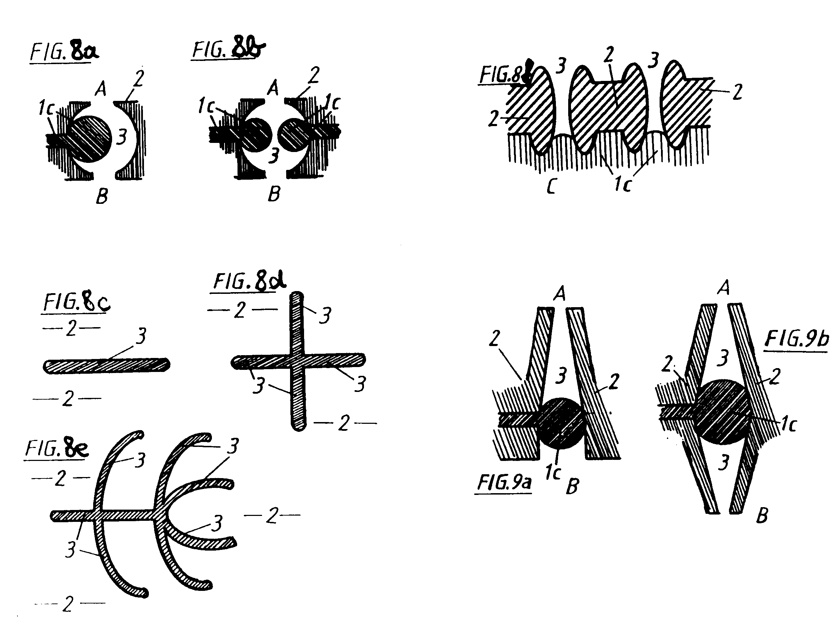

In beiden Fällen können die Lochkanäle im Bereich der seitlichen Öffnung für das Trennfluid 1c entsprechend Figur 8a und 8b behälterförmig oder lokal konvex ausgebildet werden, um so die Grenzflächen des Trennfluides 1c möglichst stabil zu halten.

Zusätzlich können für diesen Zweck die Querschnittsflächen der Lochkanäle 3 gegenüber den Raumteilen A und B spaltenförmig gemäß Figur 8c, sternförmig gemäß Figur 8d oder verästelt gemäß Figur 8e gestaltet werden. Soll durch das jeweilige Grenzflächenventil im geöffneten Zustand eine Strömung fließen, so können die innere Wandung und die Enden derselben strömungsgünstig entsprechend Figur 8f ausgestaltet werden.

Auch können zum gleichen Zweck die an die Raumteile A und B angrenzenden Ränder der Lochkanäle 3 mit stutzenförmigen Verlängerungen versehen werden, die sich gegebenenfalls wenigstens bezüglich einer Querschnittsebene senkrecht zu der Trennfläche T konisch verjüngen (Figur 9a, 9b).

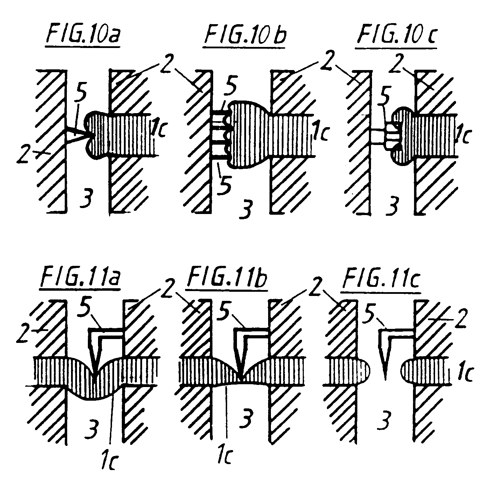

Außerdem können zur Ausbildung weiterer stärker gekrümmter Grenzflächenbereiche des Trennfluides 1c innerhalb des Lochkanales 3 oder an den, den Raumteilen A und B gegenüberstehenden Lochflächen Anpreßstempel 5 mit der Halterung 2 gemäß Figur 10a, 10b, 10c, 11a, 11b, 11c fixiert werden. Solche Anpreßstempel die von verschiedenster Form sein können, können insbesondere für Zwecke des kontrollierten Lochschlusses der Oberfläche des Trennfluides 1c verwendet werden. Im übrigen beschränken sich die hier gemachten Aussagen über die Variationsmöglichkeiten der Formgebung der Lochkanäle sowie der Anpreßstempel nicht allein auf die Zweiplatten-Grenzflächenventile sondern gelten auch für alle anderen Typen.

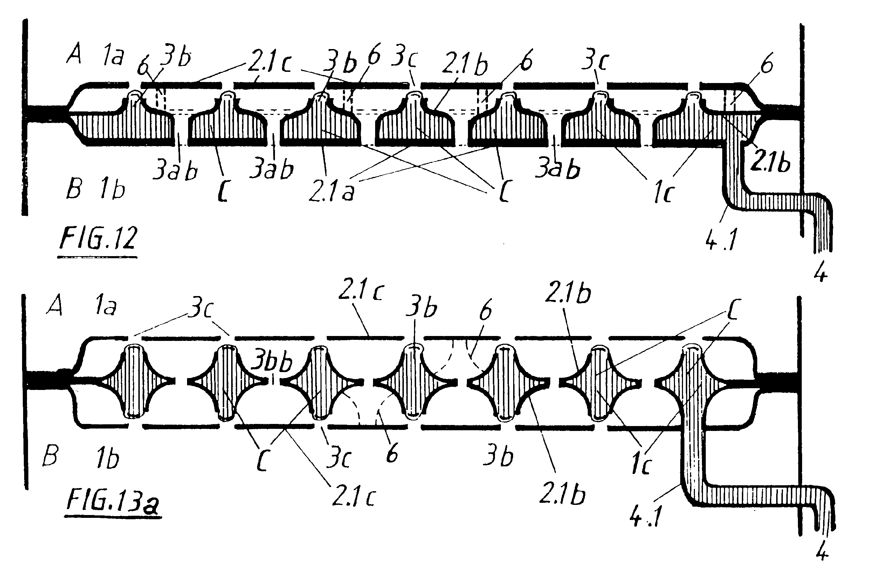

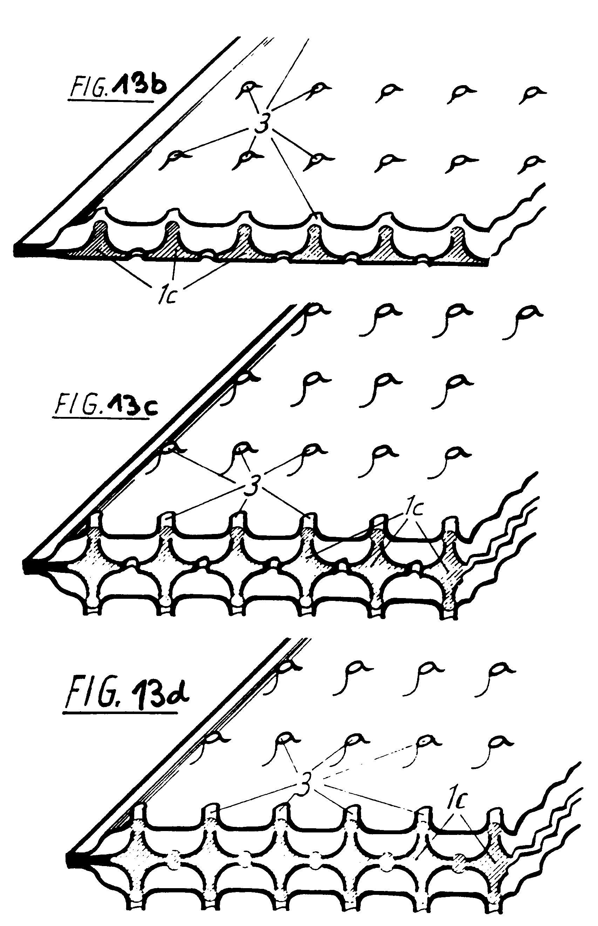

Bei den Ausführungsformen der Halterung 2, deren Querschnitte schematisch in Figur 12 und Figur 13 dargestellt sind, handelt es sich um Grenzflächenventile mit Lochanpreßplatten. Diese können wie die bisher beschriebenen Einplatten- und Zweiplatten-Grenzflächenventile in einfacher Weise großflächig ausgelegt und beispielsweise aus Kunststoffolien nach dem Tiefziehverfahren hergestellt werden. Sie sind weitgehend lageunabhängig und arbeiten relativ schnell, da nur geringe Mengen des Trennfluides 1c nötig sind, um die Löcher der jeweiligen Lochanpreßplatten zu verengen oder zu verschließen.

Beide Typen lassen sich mit den Halterungen der zuvor beschriebenen Grenzflächenventile kombinieren. Auch ihre Form läßt sich in weiten Grenzen variieren, ohne daß dabei ihre Funktion beeinträchtigt wird.

Die Halterung 2 entsprechend der Figur 12 umfaßt die Lochanpreßplatte 2.1c mit periodisch angeordneten Löchern 3c und ein gegenüberstehend angeordnetes, durch einen Abstandshalter 6 fixiertes System von Kammern C für das Trennfluid 1c, wobei die Kammern C untereinander mit dem Druckmechanismus 4 über eine oder mehrere Druckleitungen 4.1 verbunden sind. Dieses System von Kammern C ist ferner mit Lochkanälen 3ab so durchsetzt, daß sich die beiden Raumteile A und B über die Löcher 3c der Lochanpreßplatte 2.1c verbinden lassen. Die einzelnen Kammern C besitzen neben den Verbindungsleitungen zueinander und zum Druckmechanismus 4 jeweils eine oder mehrere Tropfenaustrittsöffnungen 3b, die den Löchern 3c der Lochanpreßplatte 2.1c gegenüberstehend angeordnet und diesen bezüglich der Form ihrer Lochflächen und Lochränder so angepaßt sind, daß das Fluid 1c innerhalb des zulässigen Druckintervalles (P0, P1) so aus den Tropfenaustrittsöffnungen 3b herausgepreßt und wieder abgesaugt werden kann, daß die Löcher 3c der Lochanpreßplatte 2.1c verengt, verschlossen und wieder geöffnet werden können.

Die Rammern C für das Trennfluid 1c und ihre Verbindungsleitungen zueinander und zum Druckmechanismus können beispielsweise durch Verkleben oder Verschweißen zweier entsprechend vorgeformter Lochplatten hergestellt werden. Insgesamt kann die gesamte Halterung 2 aus der oberen Lochanpreßplatte 2.1c, der mittleren Tropfenaustrittsplatte 2.1b und der Lochkammer-Bodenplatte 2.1a mittels den Abstandshaltern 6 oder entsprechenden Ausbeulungen dieser drei Platten, die als Abstandshalter dienen, durch Verkleben oder Verschweißen gefertigt werden. Ihre Stabilität wird zudem dadurch erhöht, daß alle drei Platten am seitlichen Rand miteinander verbunden werden.

Die Ausführungsform der Halterung 2 gemäß Figur 13 a ist eine Kombination zweier Halterungen gemäß Figur 12. Sie entsteht dadurch, daß die Halterungen nach Figur 12 so miteinander verbunden werden, daß die Kammern C für das Trennfluid 1c und die Öffnungen 3ab der Lochkanäle aneinandergrenzen. Die beiden Lochkammer-Bodenplatten 2.1a sind dabei für die Funktion dieses so kombinierten Grenzflächenventiles unwesentlich und können weggelassen werden, falls nur die beiden Tropfenaustrittsplatten 2.1b so miteinander verbunden werden, daß die Lochkanäle 3bb und die gemeinsamen Kammern C für das Trennfluid 1c zusammen mit ihren Zuleitungen erhalten bleiben und über eine Druckleitung 4.1 an den Druckmechanismus 4 angekoppelt sind. Die Ausführungsformen der Halterung 2 nach Figur 12 und Figur 13 a können bezüglich ihrer Formgebung in weiten Grenzen variiert werden, ohne daß dabei ihre Funktion beeinträchtigt wird.

Es lassen sich auch die Halterungen 2 aus Figur 12 und Figur 13 mit den zuvor beschriebenen, sowie untereinander kombinieren. Man vergleiche hierzu Figur 13b, 13c, 13d. Alle beschriebenen Ausführungsbeispiele des Grenzflächenventiles sowie ihre Kombinationen eignen sich in bisher einzigartiger Weise für Zwecke der Verfahrenstechnik und der Elektrochemie.

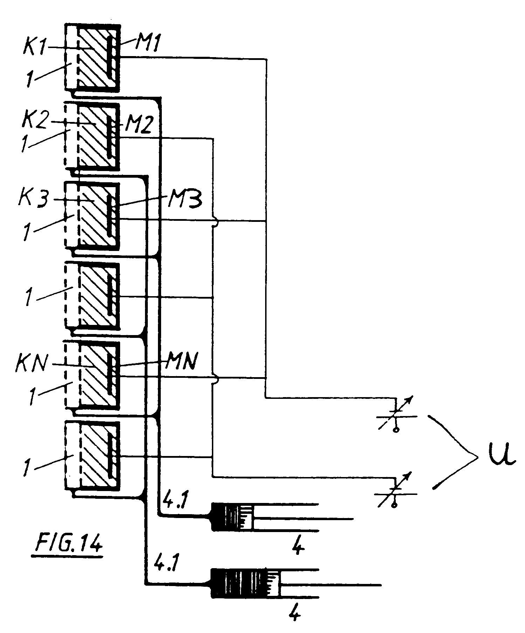

Figur 14 zeigt den schematischen Aufbau eines erfindungsgemäßen Mehrstoffelektrodensystemes. Mit einem solchen Elektrodensystem lassen sich beispielsweise, ohne die Elektrolytlösung wechseln zu müssen, auf galvanischem Wege metallische Vielschichtsysteme und Supragitterstrukturen mit Schichtfolgen in der Größenordnung von einigen zehntausend und mehr herstellen. Bereits aus diesem Umstand ergeben sich beispielsweise für die Materialwissenshaft völlig neue Aspekte.

Das Mehrstoffelektrodensystem umfaßt N = 1, 2, 3,... flächenförmig angeordnete Kammern K1, K2,..., die durch ebensoviele Grenzflächenventile 1 kontrolliert geöffnet und verschlossen werden können. In die Kammern K1, K2,... sind Elektroden aus verschiedenen Materialien M1, M2,..., MK eingebracht, die über isolierte elektrische Leitungen mit äußeren, geeigneten Spannungsquellen verbunden werden können.

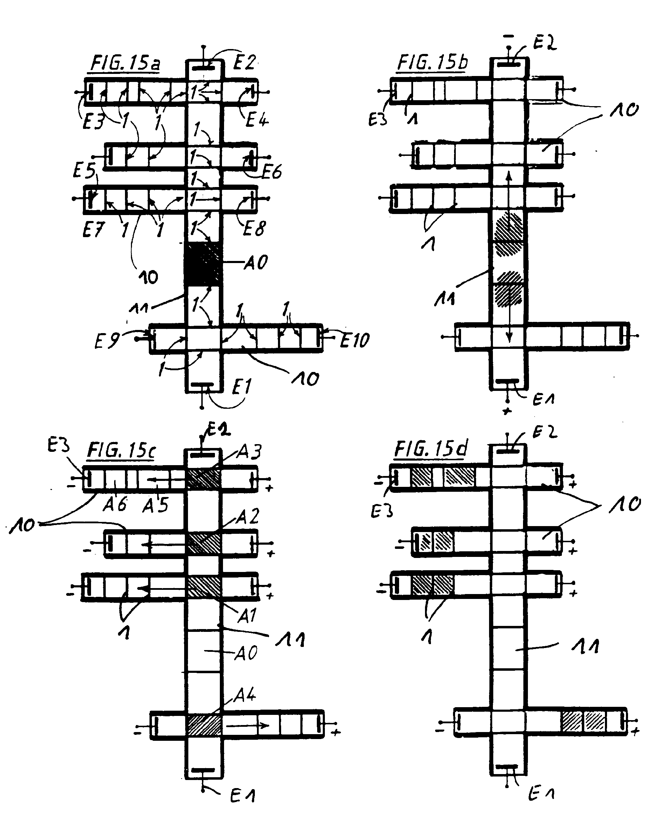

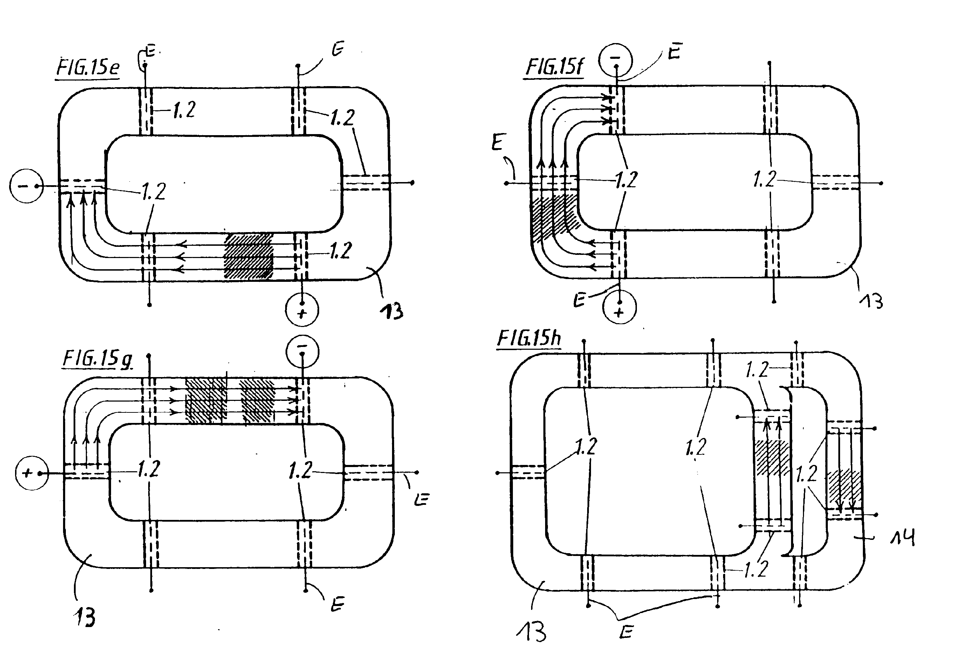

Der hauptsächliche Schwerpunkt der Anwendung des erfindungsgemäßen Grenzflächenventiles dürfte auf dem Gebiet der Stofftrennung liegen und insbesondere die Trennung von Ionengemischen durch Ausnutzung unterschiedlicher Ionenwanderungsgeschwindingkeiten in wäßrigen und nicht-wäßrigen Elektrolyten mit entsprechend gepolten elektrischen Feldern betreffen. Ein einfaches Ausführungsbeispiel einer solchen Ionentrenngsapparatur ist in Figur 15a, 15b, 15c, 15d schematisch dargestellt. Sie umfaßt einen röhrenförmigen Behälter für die Elektroden und den Elektrolyten,der mit Grenzflächenventilen 1 so versehen ist, das das sich in dem Raumteil AO befindende und zu trennende Ionengemisch zunächst eingeschlossen ist.

Wird an die beiden Elektroden E1 und E2 eine geeignete Spannung U angelegt und werden die beiden Grenzflächenventile, die den Raumteil AO abschließen, geöffnet, so bildet sich in dem röhrenförmigen Behälter ein elektrisches Feld aus und die zu entmischende Ionenwolke beginnt sich entsprechend ihrem Anionen- und Kationenanteil zu den beiden Elektroden hin zu bewegen. Sollen nun beispielsweise aus dem Kationenanteil eine bestimmte Ionensorte aus Q verschiedenen Kationensorten abgetrennt werden, so sind die verschiednen Wanderungsgeschwindigkeiten in dem betreffenden Elektrolyten bezüglich der angelegten Spannung zu vergleichen. Ist der vorhandene Wanderungsweg genügend lang, so können die einzelnen Kationensorten unter entsprechenden Bedingungen trotz statistischer Vorgänge wie beispielsweise Diffusionsprozesse, innerhalb verschiedener Segmente A1, A2, A3,... mit einer gewissen bevorzugten Anreicherung festgestellt werden. Sind diese Segmente ihrerseits wie der Raumteil A0 mit paarweise angeordneten Grenzflächenventilen 1 versehen, so kann bereits eine erste grobe Trennung dieses Ionengemisches erreicht werden. Für die weitere Trennung, beziehungsweise Anreicherung einer bestimmten Ionensorte sind an diese Segmente des röhrenförmigen Behälters weitere, seitlich an die Segmente A1, A2,... angebaute und mit Grenzflächenventilen 1 unterteilte, röhrenförmige Behälter mit Elektroden vorgesehen. Durch Öffnen der betreffenden Grenzflächenventile und Anlegen entsprechender Spannungen kann der vorangegangene Trennvorgang quer zur vorherigen Wanderungsrichtung wiederholt werden.

Prinzipiell können in dieser Weise beliebig große Trennanlagen mit dendritischer Struktur gebaut und betrieben werden.

Gegebenenfalls kann es von Interesse sein, das zu trennende Ionengemisch innerhalb der röhrenförmigen Behälter durch lokal begrenzte elektrische Felder zu bewegen, die sukzessive in der gewünschten Wanderungsrichtung mitbewegt werden. Ferner kann es sich als zweckmäßig erweisen, die für die Erzeugung des elektrischen Feldes notwendigen Elektroden durch Grenzflächenventile vor etwaigen chemischen Reaktionen mit der ankommenden Ionenwolke zu schützen. Diese beiden Gesichtspunkte spielen insbesondere dann eine Rolle, wenn die zur Trennung der Ionen notwendige Weglänge die Länge des betreffenden röhrenförmigen Behälters übersteigt. Ist ein solcher Behälter ringförmig geschlossen und kann in diesem ein entsprechend langsam wanderndes elektrisches Feld erzeugt werden (Figur 15e, 15f, 15g), so läßt sich der zur Trennung notwendige Weg theoretisch beliebig verlängern. Damit sich beim Durchlaufen der Kationen- und der Anionenteil infolge ihrer entgegengesetzten Wanderungsrichtung nicht durchdringen, können entsprechend Figur 15h zusätzliche Ausweichstrecken W, die über weitere Grenzflächenventile an den ringförmigen Behälter angekoppelt sind, eingebaut werden.

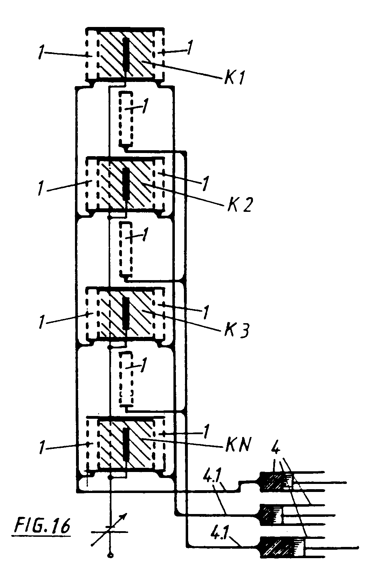

Für alle diese erfingungsgemäßen Trennanlagen ist das in Figur 16 schematisch dargestellte Grenzflächenventilsystem für die Stofftrennung besonders geeignet. Es unterscheidet sich von dem Grenzflächenventilsysstem gemäß Figur 14 dadurch, daß die Kammern K1, K2, K3,... für die Elektroden beidseitig, zu den Raumteilen A und B hin, durch ansteuerbare Grenzflächenventile 1 kontrolliert verschließbar sind. Ferner sind neben den Kammern K1, K2, K3,... zusätzlich innerhalb der wirksamen Fläche L = 1, 2, 3,... getrennt ansteuerbare Grenzflächenventile eingebaut. Auch solche Grenzflächenventilsyteme sind kostengünstig in der Herstellung und praktisch verschleißfrei.

## Patentansprüche

1. Verfahren zum Trennen eines Fluides, **dadurch gekennzeichnet**, daß durch schichtartiges Einbringen eines Trennfluides (1c) in das Fluid (1a, 1b) eine Trennschicht (T) aufgebaut wird, deren Grenzflächenspannung eine Trennung des Fluides (1a, 1b) hervorruft, wobei das Trennfluid einer mit mindestens einem Lochkanal (3) versehenen Halterung zugeführt wird.

2. Verfahren nach Anspruch 1, **dadurch gekennzeichnet**, daß durch Absaugen oder Weiterleiten des Trennfluides (1c) aus/in dem Fluid (1a, 1b) die Trennschicht abgebaut wird, so daß das Fluid (1a, 1b) wiedervereinigt wird.

3. Verfahren nach Anspruch 1 oder 2, **dadurch gekennzeichnet**, daß das Fluid ein erstes (1a) und ein zweites Fluid (1b) umfaßt, zwischen denen die Trennschicht (T) aus dem Trennfluid (1c) so aufgebaut wird, daß infolge der Trennung das erste Fluid (1a) in einem ersten Raumteil (A) und das zweite Fluid (1b) in einem zweiten Raumteil (B) verweilt.

4. Verfahren nach einem der Ansprüche 1 bis 3, **dadurch gekennzeichnet**, daß das Trennfluid (1c) mit einem Druck- und/oder Saugmechanismus (4) einer Halterung (2), die am Ort der zu erzeugenden Trennschicht (T) angeordnet ist, zugeführt wird, daß das Trennfluid (1c) zumindest teilweise in mindestens einen in der Halterung (2) ausgebildeten Lochkanal (3) eindringt, der den ersten Raumteil (A) mit dem zweiten Raumteil (B) verbindet, daß dann das Trennfluid (1c) mindestens einen Teil der Lochkanäle (3) verschließt oder verengt, und daß mit dem Druck- und/oder Saugmechanismus (4) eine so große Grenzflächenspannung des Trennfluides (1c) aufgebaut wird, daß mindestens das Fluid (1a, 1b) eines der Raumteile (A, B) nicht in die Lochkanäle (3) eindringen kann.

5. Verfahren nach Anspruch 4, **dadurch gekennzeichnet,** daß nach einer vorbestimmten Zeit mittels des Druckmechanismus (4) die Grenzflächenspannung des Trennmediums (1c) wieder abgebaut wird und das Trennfluid (1c) von den verschlossenen Lochkanälen entfernt wird, so daß die Lochkanäle (3) wieder geöffnet werden und das Fluid (1a, 1b) aus den beiden Raumteilen (A, B) wiedervereinigt wird.

6. Verfahren nach Anspruch 4 oder 5, **dadurch gekennzeichnet**, daß beim Einpressen oder Absaugen des Trennfluides (1c) in die Halterung (2) gleichzeitig Teilvolumina der Fluide (1a, 1b) entsprechend der jeweiligen Verdrängung der Fluide (1a, 1b) durch das Trennfluid (1c) aus den betreffenden Raumteilen (A, B) abgesaugt oder eingepreßt werden.

7. Grenzflächenventil zum Trennen oder Vereinigen eines ersten Fluides, das einen ersten Raumteil ausfüllt und eines zweiten Fluides, das einen zweiten Raumteil ausfüllt, **dadurch gekennzeichnet**, daß am Ort einer zwischen den beiden Raumteilen (A, B) zu erzeugenden Trennschicht (T) eine Halterung (2) für ein Trennfluid (1c) vorgesehen ist, mit mindestens einem Lochkanal (3), über den das erste Raumteil (A) und das zweite Raumteil (B) miteinander verbunden sind, mit einem Druck- und/oder Saugmechanismus (4), über den der Halterung (2) das Trennfluid (1c) so zugeführt werden kann, daß das Trennfluid (1c) zumindest einen Teil der Lochkanäle (3) reversibel verschließt oder verengt und eine Grenzflächenspannung des Trennfluides (1c) aufgebaut wird, die das Eindringen des Fluides (1a, 1b) mindestens eines Raumteiles (A, B) in die verschlossenen Lochkanäle (3) verhindert.

8. Grenzflächenventil nach Anspruch 7, **dadurch gekennzeichnet**, daß die Halterung (2) eine Platte (2.1a) umfaßt und daß das Trennfluid (1c) so gewählt ist, daß es infolge von Auftriebskräften oder des eigenen Gewichtes in einer stabilen Lage gehalten wird.

9. Grenzflächenventil nach Anspruch 7 oder 8, **dadurch gekennzeichnet**, daß die Halterung (2) für das Trennfluid (1c) eine Lochanpreßplatte (2.1c), eine Tropfenaustrittsplatte (2.1b) und eine Lochkammerbodenplatte (2.1a) umfaßt, wobei die Lochanpreßplatte (2.1c), die Tropfenaustrittsplatte (2.1b) und die Lochkammerbodenplatte (2.1a) in zu der Trennschicht (T) parallelen Ebenen übereinander angeordnet sind und durch Abstandshalter (6) an den seitlichen Rändern oder durch Ausbeulungen der Lochanpreßplatte (2.1c), der Tropfenaustrittsplatte (2.1b) und der Lochkammerbodenplatte (2.1a), die zur Abstandshaltung dienen, miteinander verbunden sind, wobei die Lochkammerbodenplatte (2.1a) und die Tropfenaustrittsplatte (2.1b) mit einer Anzahl N Kanälen, N = 1, 2, 3,... mit durchgehenden angeschlossenen Wänden, die ihrerseits wiederum als Abstandshalter von der Lochkammerbodenplatte (2.1a) und der Tropfenaustrittsplatte (2.1b) dienen, so versehen sind, daß für das Trennfluid (1c) ein zusammenhängendes Kammervolumen (C) entsteht, das über eine Druckleitung (4.1) mit dem Druck- und Saugmechanismus (4) verbunden ist, und die Tropfenaustrittsplatte (2.1b) mit einer Anzahl M der Lochkanäle (3b) versehen ist, die so angeordnet sind, daß zu jedem der M Lochkanäle (3c) der Lochanpreßplatte (2.1c) genau ein Lochkanal (3b) der Tropfenaustrittsplatte (2.1b) gegenüberstehend angeordnet ist, so daß mittels des Druck- und Saugmechanismus (4), der über die Druckleitung (4.1) auf das Trennfluid (1c) in dem Kammervolumen (C) wirkt, das Trennfluid (1c) reversibel so aus den Lochkanälen (3b) der Tropfenaustrittsplatte (2.1b) herausgedrückt und wieder abgesaugt werden kann, und daß infolge der Ausbildung von stabilen tropfenähnlichen Grenzflächenbereichen des Trennfluides (1c) die Lochkanäle (3c) der Lochanpreßplatte (2.1c) kontrolliert verengt, geschlossen und wieder geöffnet werden können.

10. Grenzflächenventil nach Anspruch 7, insbesondere für Verfahren der Elektrophorese mit Luft als Trennfluid (1c), **dadurch gekennzeichnet**, daß die Halterung (2) für das Trennfluid (1c) die folgenden gerätefesten und insbesondere verschraubbaren Teile aufweist: a) eine mittlere Abstandsplatte (2.1ba) in der ein durchgehender, unten und oben offener, mäanderförmig angeordneter Kanal mit äußeren Zu- und Ablaufstutzen (4.1) für den kontrollierten Transport des Trennfluides (1c) und des umgebenden Fluides (1a) ausgespart sind, b) zwei Stücke Textilgewebe (2.1d), die der mittleren Abstandsplatte (2.1ba) flächengleich angepaßt sind, deren Gewebe so gewählt und welche so imprägniert sind, daß sie wasserdurchlässig sind und das Innere des mäanderförmigen Kanales gegen das umgebende Fluid (1a), für das Wasser verwendet wird, in den Raumteilen (A, B) abgrenzen und das verwendete Trennfluid (1c) aufgrund der Porenstruktur in diesem zurückhalten, c) zwei Lochrasterplatten (2.1aa) zum Anpressen und Fixieren der beiden Stücke Textilgewebe (2.1d) an der mittleren Abstandsplatte (2.1ba).

11. Grenzflächenventil nach Anspruch 7 für annähernd horizontale Trennflächen, **dadurch gekennzeichnet**, daß die Halterung (2) für das Trennfluid (1c) aus einer von Platten gebildeten Kammer besteht, die den plattenförmigen Hohlraum (D) einschließt und in die Decken- und Bodenplatte der Halterung (2) musterförmig und flächendeckend gleich lange Kapillaren oder Röhren (3.2) annähernd vertikal so eingelassen sind, daß sich die Projektionen ihrer in D hineinragenden Enden auf eine vertikale Bezugslinie überschneiden, so daß die Raumteile (A, B) durch das Grenzflächenventil nur dann miteinander verbunden sind, wenn weder die Enden der von unten nach oben hineinragenden Enden der Kapillaren oder Röhren (3.2), noch die der von oben nach unten hineinragenden Röhren oder Kapillaren (3.2) durch das Trennmedium bedeckt sind, und daß der Hohlraum (D) für das Trennfluid (1c) mit wenigstens jeweils einem Zulaufstutzen (4.1) und einem Ablaufstutzen (4.1) versehen ist.

12. Grenzflächenventil nach Anspruch 7 für Kapillarrohre, **dadurch gekennzeichnet**, daß das Trennfluid (1c) in einer Kammer (C) eingeschlossen ist und über eine Kapillare mit größerem freien Querschnitt als der der Kapillare (3d) mit dem Kapillarrohr (3d) T-förmig verbunden ist und daß die Druckerzeugung in der Kammer (C) durch Wärmeausdehnung des Trennfluides (1c) infolge der Ohmschen Wärme des vom Steuerstrom durchflossenen Widerstandes (R) bewirkt wird.

13. Verwendung von Grenzflächenventilen nach einem der Ansprüche 7 bis 12 in einem Grenzflächenventilsystem für Mehrstoffelektroden für flüssige Elektrolyte, **dadurch gekennzeichnet**, daß N einzelne Elektroden, N = 1, 2,... aus den Materialien M1, M2, M3,..., MK, die entweder einzeln oder gruppenweise mittels isolierter elektrischer Leitungen mit entsprechenden Spannungsquellen verbunden werden können, in N Kammern K1, K2, K3,..., KN, die gegebenenfalls gruppenweise miteinander durch Rohrleitungen verbunden sind, gerätefest eingebracht sind, wobei diese N Kammern K1, K2,..., KN, durch N der Grenzflächenventile die einzeln oder gruppenweise kontrolliert geöffnet, verengt oder wieder geschlossen werden können, gegenüber dem flüssigen Elektrolyten abgetrennt sind.

14. Verwendung des Grenzflächenventiles nach einem der Ansprüche 7 bis 12 in einem Grenzflächenventilsystem zur Ionentrennung für flüssige Elektrolyte durch Elektrophorese, **dadurch gekennzeichnet**, daß J einzelne, aber gemeinsam ansteuerbare Grenzflächenventile, zusammen mit N Kammern K1, K2, ..., KN, N = 1, 2, ... die jeweils an ihrer Vorder- und ihrer Rücseite durch eines der Grenzflächenventile (1) abgegrenzt werden, flächendeckend, mosaikartig und gerätefest so angeordnet sind, daß die Vorderseite und die Rückseite des Grenzflächenventilsystemes aus je J + N Grenzflächenventilen (1) gebildet wird, wobei das Teilsystem der N Grenzflächenventile (1) der Vorderseite der Kammern K1, ... KN und das Teilsystem der N Grenzflächenventile der Rückseiten derselben Kammern sowie das Teilsystem der J einzelnen Grenzflächenventile jeweils gleichzeitig, aber voneinander unabhängig durch Druckgeber (4) über Druckleitungen (4.a) so angesteuert werden können, daß sie gruppenweise kontrolliert gegenüber dem umgebenden flüssigen Elektrolyten geöffnet, verengt oder wieder geschlossen werden können, und daß in den N Kammern K1, ... KN Elektroden M1, M2, ... MN gerätefest angebracht sind, welche mittels isolierter elektrischer Leitungen gemeinsam mittels einer entsprechenden Spannungsquelle U verbunden werden können.

15. Verwendung von Grenzflächenventilen nach einem der Ansprüche 7 bis 12 in einem Grenzflächenventilsystem zur räumlichen Trennung von Ionengemischen durch Elektrophorese, **dadurch gekennzeichnet**, daß eine Anzahl von länglichen Behältern oder Rohren (10, 11) so angeordnet ist, daß die Behälter oder Rohre sich teilweise gegenseitig durchdringen und eine dentritische Struktur bilden, daß im Inneren der Behälter oder Rohre (10, 11) an dem einen Ende jeweils eine Kathode E1, E2, ... EN, an dem gegenüberliegenden Ende jeweils eine Anode E1, E2,... EN angeordnet ist und die Behälter oder Rohre einen flüssigen Elektrolyten enthalten, und daß die Grenzflächenventile (1) an den Durchdringungsflächen der Behälter oder Rohre (10, 11) angeordnet sind.

16. Verwendung von Grenzflächenventilen nach Anspruch 15, **dadurch gekennzeichnet**, daß in den Behältern oder Rohren (10, 11) zwischen den beiden sich gegenüberstehenden, an den beiden Enden der Behälter oder Rohre angeordneten Elektroden E1, E2, ... weitere Grenzflächenventile (1) angeordnet sind.

17. Verwendung von Grenzflächenventilen nach Anspruch 15 oder 16, **dadurch gekennzeichnet**, daß die Behälter oder Rohre (10, 11) in sich geschlossen sind, so daß das Ionengemisch mittels der Elektroden E1, E2, ... entlang eines endlosen Laufweges bewegt werden kann.

18. Verwendung von Grenzflächenventilen nach einem der Ansprüche 7 bis 12, zur räumlichen Trennung von Ionengemischen durch Elektrophorese, **dadurch gekennzeichnet**, daß die Grenzflächenventile (1.2) in einem in sich geschlossenen Behälter (13) mit einem flüssigen Elektrolyten angeordnet sind, wobei zwischen je zwei sich gegenüberstehenden Grenzflächenventilen (1.2) eine Elektrode (E) angeordnet ist und die von je zwei der Grenzflächenventile (1.2) umgebenen Elektroden (E) in vorgegebenen Abständen entlang des Behälters (13) so angeordnet sind, daß das Ionengemisch durch ein sukzessives Anlegen geeigneter Spannungen an die Elektroden (E) entlang des Behälters geführt werden und somit einen endlosen in sich geschlossenen Weg durchlaufen.

19. Verwendung von Grenzflächenventilen nach einem der Ansprüche 15 bis 18, **dadurch gekennzeichnet**, daß von dem Behälter (10, 11, 13) ein Nebenbehälter (14) abzweigt und wieder in den Behälter (10, 11, 13) einmündet, wobei in dem Nebenbehälter (14) Grenzflächenventile (1.2, 1) und Elektroden (E) so angeordnet sind, daß der Nebenbehälter (14) einen Nebenweg bildet, entlang dem ein Teil des Ionengemisches ausweichen kann.

## Claims

1. Method for the separation of fluids wherein layer-like insertion of a separating fluid (lc) into the fluid (la, lb), builds up a separation layer (T), causing the separation of the fluids (la, lb) by its interfacial tension, whereby the separating fluid is supplied to a support which is equipped with at least one channel hole (3).

2. Method according to claim 1, wherein by exhausting or transferring the separating fluid (1c) from or within the fluid (1a, 1b), the separation layer (T) is demounted, thus re-uniting the fluid (1a, 1b).

3. Method according to claim 1 or 2, wherein the fluid comprises a first fluid (1a) and a second fluid (1b), its separation layer (T) being built up in such a manner that the separation causes the first fluid (1a) to remain within the first compartment (A) and the second fluid (1b) to remain in a second compartment (B).

4. Method according to any of claims 1,2,3, wherein the separation fluid (1c) is transferred by a pumping mechanism (4) to a support (2) which is located at the place where the separation layer (T) is to be built up, and wherein at least part of the separating fluid (1c) enters at least one of the channel holes (3) that link up the first compartment (A) with the second compartment (B), thus causing the separating fluid to seal or narrow at least some of the channel holes (3) and wherein with the aid of the pumping mechanism (4) interfacial tension of the separating fluid is established strong enough that at least the fluid (1a, 1b) within the compartments (A, B) cannot penetrate into the channel holes (3).

5. Method according to claim 4, whereby after a predetermined time, the interfacial tension of the separating fluid (1c) is reduced by a pumping mechanism (4) and whereby the separating fluid (1c) is removed from the sealed channel holes (3), thus reopening the channel holes (3) and reuniting the fluid 1a, 1b from the two compartments (A, B).

6. Method according to claim 4 or 5, whereby whilst the separating fluid (1c) is being pressed in or exhausted from the support (2), simultaneously partial volumina of the fluids (1a, 1b) are being exhausted or pressed in from or to the corresponding compartments (A, B) according to the corresponding volume of displacement of the fluid (1a, 1b).

7. Interface valve for separation or fusion of a first fluid which fills the first compartment and a second fluid which fills a second compartment, wherein at the place between the two compartments (A, B) where the separating layer (T) is to be generated, a support (2) for a separating fluid (1c) is provided for, that has at least one channel hole (3) linking the first compartment (A) with the second compartment (B) wherein by a pumping mechanism (4) the separating fluid (1c) can be supplied to the support (2) in such a way that the separating fluid (1c) seals or narrows at least some of the channel holes (3) reversibly and wherein the interfacial tension of the separating fluid (1c) is built up, which prevents the fluid (1a, 1b) from at least one compartment (A, B) from penetrating the sealed channel holes (3).

8. Interface valve according to claim 7, wherein the support (2) comprises a plate (2.1a) and wherein the separating fluid (1c) is chosen in such a manner that it is held in a stable position by upward pressure or by its own weight.

9. Interface valve according to claim 7 or 8, wherein the support (2) for the separating fluid (1c) comprises a hole-press-plate (2.1c), a bubble-pouring-plate (2.1b) and a hole-chamber baseplate (2.1a) arranged one-upon-the-other in a parallel position to the separation layer and being fixed together by spacers (6) at the lateral edges or by bucklings of the hole-press-plate (2.1c), of the bubble-pouring-plate (2.1b) or of the hole-chamber baseplate (2.1a) which serve as spacers, whereby the hole-chamber baseplate (2.1a) and the bubble-pouring-plate (2.1b) are furnished with a number of N channels, N = 1, 2, 3 ... having closed walls throughout, which serve as spacers from the bubble-pouring-plate (2.1b) and the hole-chamber baseplate (2.1a) in such a way that an interconnective chamber volume (C) is formed for the separating fluid, being connected to the pumping mechanism (4) by a pressure pipeline (4.1) and whereby the bubble-pouring-plate (2.1b) is furnished with a number M of channel holes (3b) arranged in such a way that for each of the M channel holes (3c), M = 1, 2, 3 ... of the hole-press-plate (2.1c) one channel hole (3b) of the bubble-pouring-plate (2.1b) is located exactly opposite, and so that with the aid of the pumping mechanism (4) which reacts through the pressure pipeline (4.1) onto the separating fluid (1c) within the chamber volume (C) the separating fluid (1c) can be pressed out reversibly from the channel holes (3b) of the bubble-pouring-plate (2.1b) and exhausted again and by forming stable bubble-like interfacial areas of the separating fluid (1c), the channel holes (3c) of the hole-press-plate (2.1c) can be narrowed, sealed and opened again in a controllable manner.

10. Interface valve according to claim 7, in particular for the method of electrophoresis using gas or air as the separating fluid (1c), wherein the support (2) for the separating fluid (1c) contains the following parts being fixed to the device and in particular with screw connections:
a) one medium spacing plate (2.1ba) having a continuous, meander-like shaped channel, being open at the top and bottom and having outer feeding - and bleeding pipes (4.1) for the controlled transport of the separating fluid (1c) and the adjacent fluid (1a),
b) two pieces of textile fabric (2.1d), which are fitted equally in area to the medium spacing plate (2.1ba), whereby the fabric is chosen and impregnated in such a way that it is penetrable by water and delimits the interior of the meander-like channel from the adjacent fluid (1a) for which water is used, within the compartments (A, B) and retains the separating fluid (1c) due to its porous structure,
c) two hole-grid boards (2.1aa) which serve for pressing and fixing the two pieces of textile fabric (2.1d) to the medium spacing plate (2.1ba).

11. Interface valve according to claim 7, for approximately horizontal separating planes, wherein the support (2) for the separating fluid (1c) consists of a chamber that is built up by plates, including the plate-like cavity (D) and wherein capillaries or tubes (3.2) of equal length are inserted approximately vertically, pattern-like and covering the surface in the support's cover-plate and baseplate in such a manner that the projections of their ends, which are projecting into D, onto a vertical reference line, are overlapping so that the compartments (A, B) are only inter-connected if neither the ends of the capillaries or tubes (3.2) projecting from bottom to top nor the ends of the capillaries or tubes (3.2) projecting from top to bottom are covered by the separating fluid (1c) and that the cavity (D) for the separating fluid (1c) is furnished with at least one feeding-pipe (4.1) and one bleeding-pipe (4.1) respectively.

12. Interface valve according to claim 7 for capillary tubes, wherein the separating fluid (1c) is enclosed within a chamber (C) and connected in T-like form to the capillary tube (3d) by a capillary with a larger free cross-sectional area than the capillary (3d) and wherein the generation of pressure within chamber (C) is caused by the separating fluid's (1c) thermal expansion due to electrothermics caused by the regulating current flowing through the resistor (R).

13. Application of the interface valve according to any of claims 7 to 12 within an interface valve system for multi-material electrodes for liquid electrolytes wherein N single electrodes, N = 1, 2,..., consisting of materials M1, M2, M3, ..., MK, that can be connected with corresponding power sources either singly or as an array via insulated electrical lines are mounted to N chambers K1, K2, K3, ..., KN which are connected in groups, as applicable, with one another by pipelines whereby these N chambers K1, K2, ..., KN, are separated from the liquid electrolyte by N interface valves which can be opened, narrowed or closed again singly or in groups, in a controlled fashion.

14. Application of the interface valve according to any of claims 7 to 12 within an interface valve system for ion-separation for liquid electrolytes by electrophoresis wherein single J interface valves, I = 1,2,3, ... which, however, can be controlled in groups, together with N chambers K1, K2, ..., KN, N = 1, 2, ..., being bordered in front and from the rear by one of the interface valves (1) respectively, are mounted to the device covering the surface mosaic-like in such a manner that the interface valve system's front side and rear side is made up by J + N interface valves (1), whereby the subsystem of the N interface valves (1) belonging to the front side of the chambers K1, ..., KN and the subsystem of the N interface valves belonging to the rear side of these same chambers, as well as the subsystem of the J single interface valves can be controlled simultaneously but independently of each other by pressure sources (4) through pressure pipelines (4.a) in such a way that they are opened, narrowed or closed again in groups, in a controlled fashion, against the surrounding liquid electrolyte and that the electrodes M1, M2, ..., MN are mounted to the N chambers K1, ..., KN, which are to be connected jointly with a corresponding power source U by isolated electric lines.

15. Application of interface valves according to any of claims 7 to 12 within an interface valve system destined for local separation of ionic mixtures by electrophoresis, wherein a number of lengthy vessels or tubes (10, 11) are arranged in such a way that the vessels or tubes intersect each other partially, forming a dendritic structure, so that inside the vessels or tubes (10, 11) in each case one cathode E1, E2, ... EN, is fixed to one end and in each case one anode E1, E2, ... EN, is fixed to the opposite end and whereby the vessels or tubes contain a liquid electrolyte and wherein the interface valves (1) are arranged at the vessels' and tubes' (10, 11) surfaces of intersection.

16. Application of interface valves according to claim 15 wherein further interface valves (1) are arranged within the vessels or tubes (10, 11) between the electrodes E1, E2, ..., arranged in opposite position at the ends of the vessels or tubes.

17. Application of interface valves according to claim 15 or 16 wherein the vessels or tubes (10, 11) are arranged in a ring-like form, so that the ionic mixture is moved along an endless way by the electrodes E1, E2, ...

18. Application of interface valves according to any of claims 7 to 12 destined for local separation of ionic mixtures by electrophoresis, wherein the interface valves (1.2) are arranged within a ring-like vessel (13) filled with a liquid electrolyte, whereby in each case a electrode (E) is arranged between two opposite interface valves (1.2) and these electrodes (E) surrounded each by two interface valves (1.2) are arranged at predetermined distances along the vessel (13) so that the ionic mixture is transported along the vessel by successive application of an appropriate voltage, thus running along an endless self-contained path.

19. Application of interface valves according to any of claims 15 to 18 wherein a secondary vessel (14) branches off from the vessel (10, 11, 13) and joins vessel (10, 11, 13) again, whereby interface valves (1.2, 1) and electrodes (E) are arranged within the secondary vessel (14) in such a way that the secondary vessel (14) creates an auxiliary path for part of the ionic mixture.

## Revendications

1. On caractérise le procédé de séparation d'un fluide en cela qu'en insérant par couche un fluide de séparation (1c) dans un autre fluide (1a, 1b), on crée une surface de séparation (T) dont la tension superficielle conduit à la séparation du fluide (1a, 1b), et ainsi le fluide de séparation est conduit au travers d'un support comportant au minimum un canal-de-trou (3) prévu à cet effet.

2. On caractérise le procédé d'après la revendication 1 en cela que, par le refoulement du fluide de séparation (1c) hors du fluide (1a, 1b) ou par son aspiration à travers ce dernier, la couche de séparation disparaît, de manière à ce que le fluide (1a, 1b) puisse être réuni.

3. On caractérise le procédé d'après les revendications 1 ou 2 en cela qu'un fluide comprend 2 fluides distincts (1a) et (1b), entre lesquels est érigée une couche de séparation (T) formée par le fluide de séparation (1c), de manière à ce que le fluide (1a) demeure dans la portion d'espace A et le fluide (1b) dans la portion d'espace B.

4. On caractérise le procédé d'après une des revendications 1 à 3 en cela que, par un mécanisme de pression et/ou d'aspiration (4), on achemine le fluide de séparation (1c) vers un support (2), qui correspond à la couche de séparation (T), de manière à ce que le fluide de séparation (1c) pénètre, en partie au moins, un des canaux-de-trous (3) qui relie l'espace A à l'espace B, de manière à ce que le fluide de séparation (1c) puisse fermer totalement ou partiellement l'accès aux canaux-de-trous (3), et de manière à ce que la tension superficielle du fluide de séparation (1c) créée par le mécanisme de pression et/ou d'aspiration (4) soit telle qu'au moins un des fluides (1a) et (1b) des portions d'espace respectives A et B ne puisse pénétrer les canaux-de-trous (3).

5. On caractérise le procédé d'après la revendication 4 en cela qu'après un temps prédéterminé, la tension superficielle du fluide de séparation (1c) est réduite par l'action du mécanisme de pression (4) et le fluide de séparation (1c) est ainsi évacué des canaux-de-trous (3), qui étaient alors fermés, de manière à ce que ces derniers soient rouverts et que, par ce biais, les fluides (1a, 1b) des portions d'espace A et B puissent être réunis.

6. On caractérise le procédé d'après les revendications 4 ou 5 en cela que, par la pression ou l'aspiration du fluide de séparation (1c) au travers du support (2), les volumes partiels des fluides (1a, 1b), correspondant au déplacement de ces mêmes fluides au travers du fluide de séparation (1c), sont simultanément pompés hors des ou dans les portions d'espace respectives (A, B).

7. On caractérise la soupape interfaciale permettant la séparation ou la réunion de deux fluides remplissant respectivement un premier et un second espace en cela qu'à l'intersection des deux portions d'espace (A, B) est érigé un support (2) pour un fluide de séparation (1c) qui d'une part forme une couche de séparation (T) et qui d'autre part sert à l'acheminement du fluide de séparation (1c); il doit être formé d'au moins un canal-de-trou (3) reliant le premier espace (A) au second espace (B); il doit être équipé d'un mécanisme de pression et/ou d'aspiration (4), permettant l'acheminement du fluide de séparation (1c) à travers ce support (2), de sorte que le dit fluide (1c) puisse fermer totalement ou partiellement une partie des canaux-de-trous (3), et cela d'une manière réversible, et de sorte que la tension superficielle du dit fluide (1c) ainsi créée puisse empêcher le fluide (1a, 1b) provenant d'au moins un espace (A, B) de pénétrer dans les canaux-de-trous (3), qui sont alors fermés.

8. On caractérise la soupape interfaciale d'après la revendication 7 en cela que le support (2) contient une plaque (2.1a) et que le fluide de séparation (1c) est choisi de sorte qu'il conserve sa stabilité par la force sustentatrice ou par son propre poids.

9. On caractérise la soupape interfaciale d'après la revendication 7 ou 8 en cela que le support (2) du fluide de séparation (1c) est composé d'une plaque-à-obstruction-capillaire (2.1c), d'une plaque-à-formation-de-gouttes (2.1b) et d'une plaque-de-fond-à-chambre-perforée (2.1a), accolées parallèlement l'une sur l'autre à la couche de séparation (T) et liées mutuellement par des éléments d'écartement (6) disposés sur leurs bords latéraux, ou par les bosses dans la plaque-à-obstruction-capillaire (2.1c), la plaque-à-formation-de-gouttes (2.1b) et la plaque-de-fond-à-chambre-perforée (2.1a) servant à les tenir à distance; la plaque-de-fond-à chambre-perforée (2.1a) et la plaque-à-formation-de-gouttes (2.1b) sont équipées d'un nombre N de canaux (N = 1, 2, 3...) à cloisons étanches, qui servent d'éléments d'écartement à la plaque-à-formation-de-gouttes (2.1b) et la plaque-de-fond-à-chambre-perforée (2.1a), de sorte que se forme un volume de chambre contiguë (C) destiné au fluide de séparation (1c), volume de chambre (C) alors connecté à un mécanisme de pression et/ou d'aspiration (4) par le biais d'une conduite de pression (4.1); la plaque-à-formation-de-gouttes (2.1b) est équipée d'un nombre M de canaux-de-trous (3b), qui sont disposés de manière à ce que chacun des M canaux-de-trous (3c) de la plaque-à-obstruction-capillaire (2.1c) se trouve exactement en face d'un canal-de-trou (3b) de la plaque-à-formation-de-gouttes (2.1b), de manière à ce que le fluide de séparation (1c), acheminé par le mécanisme de pression et d'aspiration (4) dans le volume de chambre (C) via la conduite de pression (4.1), soit injecté réversiblement des canaux-de-trous (3b) de la plaque-à-formation-de-gouttes (2.1b) et puisse être réaspiré, et de telle sorte que suite à la formation des zones interfaciales stables en forme de gouttes du fluide de séparation (1c), les canaux-de-trous (3c) de la plaque à obstruction capillaire (2.1c) puissent être rétrécis, fermés et rouverts de manière contrôlée.

10. On caractérise la soupape interfaciale d'après la revendication 7, en particulier pour le procédé d'électrophorèse utilisant l'air comme fluide de séparation (1c), en cela que le support (2) du fluide de séparation (1c) comporte les parties fixées à l'appareil suivantes et en particulier celles qui sont boulonnables:

a) une plaque centrale d'écartement (2.1ba) traversée par un canal méandreux ouvrable en haut et en bas, comprenant des conduites d'écoulement (4.1) servant à l'acheminement du fluide de séparation (1c) et du fluide adjacent (1a),

b) deux morceaux de tissu (2.1d) ajustés à la plaque centrale d'écartement (2.1ba), dont la matière est choisie et imprégnée de manière à ce qu'ils soient perméables à l'eau et qu'ils façonnent l'intérieur du canal méandreux du fluide (1a) adjacent pour lequel l'eau est utilisé, à l'intérieur des portions d'espace (A, B) et retiennent le fluide de séparation (1c) grâce à leur structure poreuse,

c) deux plaques-quadrillées-de-trous (2.1aa) qui servent à comprimer et à fixer les deux morceaux de tissu (2.1d) à la plaque centrale d'écartement (2.1ba).

11. On caractérise la soupape interfaciale d'après la revendication 7, pour des couches de séparation approximativement horizontales, en cela que le support (2) du fluide de séparation (1c) est formé par une chambre elle même formée des plaques, comprenant la cavité (D) de forme plane, et en cela que des capillaires ou des tubes (3.2) de longueurs équivalentes sont insérés approximativement verticalement, selon le même modèle, et recouvrant la plaque de couverture et la plaque de fond du support (2) d'une telle manière que leurs extrémités, qui font saillie dans D, selon une ligne verticale de référence, se chevauchent de telle sorte que les portions d'espace (A, B) sont reliées mutuellement par la soupape interfaciale à la seule condition que ni les extrémités des capillaires ou des tubes (3.2), qui jaillissent de haut en bas ni celles qui jaillissent de bas en haut, sont couvertes par le fluide de séparation (1c) et que la cavité (D) du fluide de séparation (1c) est équipée d'au moins une conduite d'affluence (4.1) et respectivement d'une conduite d'écoulement (4.1).

12. On caractérise la soupape interfaciale d'après la revendication 7, pour les tubes capillaires, en cela que le fluide de séparation (1c) est enfermé dans une chambre (C) et relié au tube capillaire (3d) en forme de T par un capillaire ayant une section transversale libre plus grande que celle du capillaire (3d), et que la génération de pression dans la chambre (C) est provoquée par la dilatation thermique du fluide de séparation (1c) due à la chaleur produite par le courant de commande électrique passant à travers la résistance (R).

13. Utilisation de soupapes interfaciales d'après une des revendications 7 à 12, pour un système de soupape interfaciale à électrodes multi-matériaux et à électrolyte liquide, en cela que N électrodes, N = 1, 2, 3... constituées des matériaux M1, M2, M3, ... MK, pouvant être reliées soit individuellement soit collectivement à des sources de courant correspondantes par des câbles électriques isolés, sont montées dans N chambres K1, K2, K3, ..., KN, qui dans ce cas sont reliées mutuellement collectivement par des conduites, et ainsi ces chambres K1, K2, ... KN sont séparées de l'électrolyte liquide par N soupapes interfaciales qui sont ouvertes, rétrécies ou fermées de façon contrôlée, individuellement ou collectivement.

14. Utilisation d'une soupape interfaciale d'après une des revendications 7 à 12, pour un système de soupape interfaciale de séparation d'ions d'un électrolyte liquide par électrophorèse, en cela que J soupapes interfaciales individuelles mais contrôlables collectivement, sont disposées en mosaïque de façon stationnaire sous une forme plane avec N chambres K1, K2, ... , KN, N = 1, 2, ..., délimitées sur leur recto et leur verso par une soupape interfaciale (1), de telle manière que le recto et le verso du système de soupapes interfaciales soit constitué de J + N soupapes interfaciales (1), et ainsi le sous-système des N soupapes interfaciales (1) appartenant au côté recto des chambres K1, ... , KN et le sous-système des N soupapes interfaciales appartenant au côté verso de ces chambres, de même que le sous-système des J soupapes interfaciales individuelles, peuvent être contrôlés simultanément, mais indépendamment les uns des autres, par l'intermédiaire d'un mécanisme de pompage (4), par des conduites de pression (4.a), de telle sorte qu'elles soient ouvertes, rétrécies ou fermées encore une fois collectivement et sous contrôle de l'électrolyte liquide adjacent, et que les électrodes M1, M2, ..., MN soient installées dans les N chambres K1, ..., KN; connectées à une source de courant appropriée U collective par le biais de câbles isolés.

15. Utilisation de soupapes interfaciales d'après une des revendications 7 à 12, pour un système de soupape interfaciale destiné à la séparation de mélanges ioniques par électrophorèse, en cela qu'un nombre de récipients oblongs ou de tubes (10, 11) est disposé de telle manière que les récipients ou les tubes s'entrecroisent l'un avec l'autre et forment une structure dendritique, de telle sorte que, dans les récipients ou les tubes (10, 11), une cathode E1, E2, ... EN est respectivement fixée à une des extrémités, qu'une anode E1, E2, ... , EN à l'extrémité opposée, que les récipients ou les tubes contiennent un électrolyte liquide et que les soupapes interfaciales (1) sont disposées au niveau des surfaces d'intersection des récipients et des tubes (10, 11).

16. Utilisation de soupapes interfaciales d'après la revendication 15 en cela que d'autres soupapes interfaciales (1) sont disposées dans les récipients ou les tubes (10, 11) entre les électrodes E1, E2, ... , elles-mêmes disposées les unes en faces des autres, aux extrémités des récipients ou des tubes.

17. Utilisation de soupapes interfaciales d'après la revendication 15 ou 16 en cela que les récipients ou les tubes (10, 11) sont en forme d'anneaux, de telle sorte que le mélange ionique est déplacé le long du chemin sans fin par les électrodes E1, E2, ...

18. Utilisation de soupapes interfaciales d'après une des revendications 7 à 12, pour la séparation locale de mélanges ioniques par électrophorèse, en cela que les soupapes interfaciales (1.2) sont disposées à l'intérieur d'un récipient en forme d'anneau (13) rempli d'un électrolyte liquide, et ainsi une électrode (E) est disposée entre deux soupapes interfaciales opposées (1.2), et ces électrodes (E), entourées chacune par deux soupapes interfaciales (1.2), sont disposées à des distances prédéterminées, le long du récipient (13), de manière à ce que le mélange ionique soit conduit le long du récipient par l'application d'une tension appropriée aux électrodes (E), ainsi parcourt un chemin sans fin sur lui même.

19. Utilisation de soupapes interfaciales d'après une des revendications 15 à 18 en cela qu'un second récipient (14) est branché sur le récipient (10, 11, 13) et redébouche sur le récipient (10, 11, 13), et ainsi des soupapes interfaciales (1.2, 1) et des électrodes (E) sont disposées à l'intérieur du deuxième récipient (14), de manière à ce que le second récipient (14) constitue un chemin secondaire pour une partie du mélange ionique.

FIG.1

FIG.2a

FIG.2b

FIG.2c

FIG.2d

FIG.2e

EP 0 571 403 B1

FIG. 3a

2 — A —

3   3   3

— C —   1c   — B —

FIG. 3b

2 — A —

3   3   3

— C —   1c   — B —

FIG. 3c

2 — 3   3 — A —

1c   — B —

FIG. 4a

FIG. 4b

FIG. 4c

FIG. 4d

FIG. 4e

FIG.5b

FIG.5d

FIG.5f

FIG.5a

FIG.5c

FIG.5e

21

FIG. 6a

FIG. 6b

FIG. 6c

FIG. 6d

FIG. 6e

FIG. 6f

FIG. 6g

FIG. 7a

FIG. 7b

FIG. 7c

FIG. 7d

FIG.8b

FIG.9b

FIG.9a

FIG.8a

FIG.8d

FIG.8c

FIG.8e

_FIG.10a_       _FIG.10 b_       _FIG.10 c_

_FIG.11a_       _FIG.11b_       _FIG.11c_

FIG.12

FIG.13a

FIG. **13b**

3

1c

FIG. **13c**

3

1c

FIG. **13d**

3

1c

FIG.14

FIG.15a

FIG.15b

FIG.15c

FIG.15d

FIG.15e

FIG.15f

FIG.15g

FIG.15h

FIG.16

FIG. 18

FIG.17a

FIG.17b